# EUROPEAN PATENT APPLICATION

(11) **EP 4 586 570 A1**
(43) Date of publication of application: **16.07.2025**
(21) Application number: 22966174.9
(22) Date of filing: 24.11.2022
(51) Int. Cl.: H04L 27/00

(54) **LOCATION RESERVATION PATTERN DETERMINATION METHOD AND RELATED APPARATUS**

(71) Applicant: Huawei Technologies Co., Ltd., Shenzhen, Guangdong 518129 (CN)
(72) Inventor: ZHANG, Jingwei, Shenzhen, Guangdong 518129 (CN); QIN, Dali, Shenzhen, Guangdong 518129 (CN); LUO, Hejia, Shenzhen, Guangdong 518129 (CN); MENG, Xian, Shenzhen, Guangdong 518129 (CN); QIAO, Yunfei, Shenzhen, Guangdong 518129 (CN); WANG, Jun, Shenzhen, Guangdong 518129 (CN)
(74) Representative: Gill Jennings & Every LLP
(86) International application number: PCT/CN2022/134033
(87) International publication number: WO 2024/108479

(57) **Abstract**

This application provides a location reservation pattern determining method and a related apparatus, to avoid interference to a user located in a same or close area covered by a first non-terrestrial network device and another non-terrestrial network device at the same time, thereby improving communication performance. The method provided in this application includes: A first non-terrestrial network device obtains first information of each of at least one second non-terrestrial network device, where the first information of the second non-terrestrial network device includes one or more of the following: a first location reservation pattern, service status information of at least one area unit in an area covered by the second non-terrestrial network device, and service status information of the second non-terrestrial network device, and the first location reservation pattern is used by the second non-terrestrial network device to perform communication transmission. The first non-terrestrial network device determines a second location reservation pattern based on the first information of each second non-terrestrial network device, where the second location reservation pattern is used by the first non-terrestrial network device to perform communication transmission.

## Description

### TECHNICAL FIELD

This application relates to satellite communication technologies, and in particular, to a location reservation pattern determining method and a related apparatus.

### BACKGROUND

With development of information technologies, more urgent requirements are imposed on communication efficiency, diversity, and the like. Currently, satellites play an irreplaceable role in some important fields such as space communication and aviation communication. Satellite communication features a long communication distance, a large coverage area, flexible networking, and the like. The satellites can provide services for both fixed terminals and various types of mobile terminals.

A coverage area of a single satellite is wide, which can reach thousands or even tens of thousands of kilometers. To support wide-area coverage, the single satellite needs to be configured with hundreds or even thousands of beams, but this brings great challenges to a load of the satellite. A beam hopping technology is an important technology in satellite communication, which helps reduce a load weight of the satellite, meet time-varying and uneven service requirements of a terrestrial network, and the like. In the beam hopping technology, an area covered by the satellite on the ground is mainly divided into a plurality of beam positions, and the satellite covers the plurality of beam positions in a time-division manner. At a specific moment, the satellite serves only a part of the beam positions on the ground to reduce the load of the satellite and support the wide-area coverage.

However, due to a large quantity of satellites, coverage areas of the plurality of satellites are likely to overlap. If coverage areas of two satellites overlap, and the two satellites both serve an overlapping area (that is, an overlapping beam position) at a specific moment, a user of one of the two satellites in the overlapping area is very vulnerable to interference from the other satellite, and therefore cannot obtain a high throughput within limited service time of the overlapping area, resulting in lower communication performance. Therefore, how to avoid or reduce a problem that communication performance deteriorates because a user at an edge of a coverage area of a satellite is interfered with by a neighboring satellite is an urgent problem to be resolved.

### SUMMARY

This application provides a location reservation pattern determining method, a location reservation pattern sending method, a location reservation pattern receiving method, and a related apparatus, to avoid a case in which a first non-terrestrial network device and another non-terrestrial network device (for example, a second non-terrestrial network device) cover a same area or close areas at the same time, so as to avoid or reduce interference to a user located in the area. In this way, a throughput of the user in the area is improved, and communication performance is improved.

A first aspect of this application provides a location reservation pattern determining method. The method includes:

A first non-terrestrial network device obtains first information of each of at least one second non-terrestrial network device, where the first information of the second non-terrestrial network device includes one or more of the following: a first location reservation pattern, service status information of at least one area unit in an area covered by the second non-terrestrial network device, and service status information of the second non-terrestrial network device, and the first location reservation pattern is used by the second non-terrestrial network device to perform communication transmission. The first non-terrestrial network device determines a second location reservation pattern based on the first information of each second non-terrestrial network device, where the second location reservation pattern is used by the first non-terrestrial network device to perform communication transmission.

In the foregoing technical solution, the first non-terrestrial network device obtains the first information of each second non-terrestrial network device. Then, the first non-terrestrial network device determines the second location reservation pattern with reference to the first information of each second non-terrestrial network device. This helps the first non-terrestrial network device determine a proper location reservation pattern, to avoid a case in which the first non-terrestrial network device and another non-terrestrial network device (for example, the second non-terrestrial network device) cover a same area or close areas at the same time, so as to avoid or reduce interference to a user located in the area, in other words, avoid or reduce interference to a user that is on the ground and that is located in an overlapping coverage area of the non-terrestrial network device. In this way, a throughput of the user in the area is improved, and communication performance is improved.

According to the first aspect, in a possible implementation, the first location reservation pattern is used by the first non-terrestrial network device to perform communication transmission in a first time period, the second location reservation pattern is used by the second non-terrestrial network device to perform communication transmission in second time, and the first time period overlaps the second time period. It can be learned that the first time period overlaps the second time period. In this application, the first non-terrestrial network device determines the second location reservation pattern with reference to the first location reservation pattern. This helps avoid the case in which the first non-terrestrial network device and the second non-terrestrial network device cover the same area or the close areas at the same time, to avoid or reduce the interference to the user that is on the ground and that is located in the overlapping coverage area of the non-terrestrial network device. In this way, the communication performance is improved.

According to the first aspect, in a possible implementation, there is an association relationship between the first non-terrestrial network device and the at least one second non-terrestrial network device. In this implementation, the first non-terrestrial network device is associated with the at least one second non-terrestrial network device. This helps the first non-terrestrial network device determine the proper location reservation pattern, to avoid the case in which the first non-terrestrial network device and the at least one second non-terrestrial network device cover the same area or the close areas at the same time, that is, avoid the interference to the user located in the area. In this way, the throughput of the user in the area is improved, and the communication performance is improved.

According to the first aspect, in a possible implementation, that there is an association relationship between the first non-terrestrial network device and the at least one second non-terrestrial network device includes: A value of a weight parameter of the first non-terrestrial network device is less than a value of a weight parameter corresponding to each of the at least one second non-terrestrial network device, and/or the at least one second non-terrestrial network device is a non-terrestrial network device adjacent to the first non-terrestrial network device.

In this implementation, some representation forms of the association between the first non-terrestrial network device and the at least one second non-terrestrial network device are shown. For example, the value of the weight parameter of the first non-terrestrial network device is less than the value of the weight parameter corresponding to each of the at least one second non-terrestrial network device. In other words, the first non-terrestrial network device may determine the first location reservation pattern with reference to the first information of the second non-terrestrial network device whose weight parameter is large. Usually, a non-terrestrial network device whose weight parameter is large has a large service volume, or has high service importance. This avoids interference caused by the first non-terrestrial network device to a user in a beam position for which the second non-terrestrial network device provides a service. For example, the at least one second non-terrestrial network device is the non-terrestrial network device adjacent to the first non-terrestrial network device. The first non-terrestrial network device may determine the first location reservation pattern with reference to the first information of the non-terrestrial network device adjacent to the first non-terrestrial network device. This avoids the interference caused by the first non-terrestrial network device to the user in the beam position for which the second non-terrestrial network device provides the service.

According to the first aspect, in a possible implementation, the weight parameter of the first non-terrestrial network device is determined based on service status information of the first non-terrestrial network device, or is determined based on service status information of at least one area unit in an area covered by the first non-terrestrial network device. In this implementation, two implementations of calculating the weight parameter are shown, which facilitates implementation of the solution. It can be learned from the foregoing implementation that the weight parameter of the first non-terrestrial network device may represent a service situation, a service importance degree, and the like of the first non-terrestrial network device.

According to the first aspect, in a possible implementation, the first location reservation pattern includes location information of an area unit for which the second non-terrestrial network device provides a service in the first time period. In this implementation, content included in the first location reservation pattern is shown. The first non-terrestrial network device may determine the area unit for which the second non-terrestrial network device provides the service in the first time period. This helps the first non-terrestrial network device avoid providing a service for these area units in the first time period, to avoid interference to a user in the area unit.

According to the first aspect, in a possible implementation, the location information includes an identifier of the area unit for which the second non-terrestrial network device provides the service in the first time period. In this way, overheads of indicating the area unit by the second non-terrestrial network device are reduced.

According to the first aspect, in a possible implementation, the first location reservation pattern further includes a frequency band occupied by the second non-terrestrial network device in the first time period. In this implementation, in a scenario in which different non-terrestrial network devices perform communication by using different frequency bands, the first location reservation pattern may further include the frequency band occupied by the second non-terrestrial network device in the first time period. This helps the first non-terrestrial network device determine a proper second location reservation pattern, to avoid a case in which different non-terrestrial network devices cover a same area at the same time by using a same frequency band.

According to the first aspect, in a possible implementation, the area unit for which the second non-terrestrial network device provides the service in the first time period includes one or more beam positions, and the location information includes an identifier of the one or more beam positions; or the area unit for which the second non-terrestrial network device provides the service in the first time period corresponds to one or more beams, and the location information includes an identifier of the one or more beams. In this implementation, the second non-terrestrial network device may indicate, by using the identifier of the one or more beam positions or the identifier of the one or more beams, the area for which the second non-terrestrial network device is to provide the service in the first time period. This helps the first non-terrestrial network device avoid providing the service for these area units in the first time period, to avoid the interference to the user in the area unit.

According to the first aspect, in a possible implementation, the at least one area unit is at least one beam position, and the service status information of the at least one area unit includes a beam position identifier and a service urgency value of each of the at least one beam position. In this implementation, content of the service status information of the at least one area unit is shown. The service urgency value of each beam position indicates a service urgency situation of the beam position. This helps the first non-terrestrial network device properly avoid a beam position that is adjacent to a beam position of the first non-terrestrial network device and whose service urgency value is high. This helps the second non-terrestrial network device provide a service for these beam positions, thereby improving the communication performance. In addition, this helps adjust the second location reservation pattern of the first non-terrestrial network device for a time-varying and uneven service requirement of a terrestrial terminal device, so that the solution of this application is more applicable to a satellite communication scenario.

According to the first aspect, in a possible implementation, the service status information of the second non-terrestrial network device includes one or more of the following: a quantity of terminal devices served by the second non-terrestrial network device, a service volume of the terminal device, a service delay requirement of the terminal device, a quantity of beams provided by the second non-terrestrial network device, and a load, visible time, or the weight parameter of the second non-terrestrial network device. In this implementation, some possible content of the service status information is provided. This helps the first non-terrestrial network device determine, with reference to the service status information, a service situation of the terrestrial terminal device in the area covered by the second non-terrestrial device. This helps the first non-terrestrial network device determine a proper first location reservation pattern for the time-varying and uneven service requirement of the terrestrial terminal device, to avoid interference from the first non-terrestrial network device to a user in an area covered by the at least one second non-terrestrial network device, so that the solution of this application is more applicable to the satellite communication scenario.

According to the first aspect, in a possible implementation, that a first non-terrestrial network device obtains first information of each of at least one second non-terrestrial network device includes: The first non-terrestrial network device receives the first information from each of the at least one second non-terrestrial network device; or the first non-terrestrial network device receives the first information of each of the at least one second non-terrestrial network device from a first network device. In this implementation, the first non-terrestrial network device may obtain the corresponding first information from the at least one second non-terrestrial network device or the first network device. This helps the first non-terrestrial network device determine the second location reservation pattern.

According to the first aspect, in a possible implementation, that the first non-terrestrial network device determines a second location reservation pattern based on the first information of each second non-terrestrial network device includes: When the first non-terrestrial network device joins a cluster in which the at least one second non-terrestrial network device is located, the first non-terrestrial network device determines the second location reservation pattern based on the first information of each second non-terrestrial network device. If the first non-terrestrial network device joins the cluster in which the at least one second non-terrestrial network device is located, the first non-terrestrial network device updates the location reservation pattern of the first non-terrestrial network device. In this way, the first non-terrestrial network device dynamically adjusts the location reservation pattern of the first non-terrestrial network device.

According to the first aspect, in a possible implementation, the method further includes: The first non-terrestrial network device updates the weight parameter of the first non-terrestrial network device and/or the service status information of the at least one area unit. In this implementation, if the first non-terrestrial network device joins the cluster in which the at least one second non-terrestrial network device is located, the first non-terrestrial network device may further update the weight parameter and the service status information of the first non-terrestrial network device. In this way, the first non-terrestrial network device dynamically adjusts the weight parameter and the service status information of the first non-terrestrial network device.

According to the first aspect, in a possible implementation, the method further includes: The first non-terrestrial network device updates the weight parameter of the first non-terrestrial network device and/or the service status information of the at least one area unit, where a value of an updated weight parameter is less than a first threshold, and a service urgency value indicated in updated service status information of the at least one area unit is less than a second threshold. The first non-terrestrial network device sends the updated weight parameter and/or the updated service status information of the at least one area unit. The first non-terrestrial network exits a cluster in which the first non-terrestrial network device is currently located. In this implementation, when the first non-terrestrial network exits the cluster in which the first non-terrestrial network device is currently located, the first non-terrestrial network device may update the value of the weight parameter of the first non-terrestrial network device to the first threshold, and/or update the service status information of the at least one area unit of the first non-terrestrial network device. Then, the first non-terrestrial network device sends the updated weight parameter and/or the updated service status information of the at least one area unit. The service urgency value indicated in the updated service status information of the at least one area unit is less than the second threshold. In this way, a case in which another non-terrestrial network device in the cluster determines a location reservation pattern with reference to the weight parameter and the service status information that are before the updating and that are of the first non-terrestrial network device is avoided. In this way, the first non-terrestrial network device dynamically adjusts the weight parameter and the service status information with reference to an actual motion status.

A second aspect of this application provides a location reservation pattern determining method. The method includes:

A second non-terrestrial network device determines first information of the second non-terrestrial network device, where the first information includes one or more of the following: a first location reservation pattern, service status information of at least one area unit in an area covered by the second non-terrestrial network device, and service status information of the second non-terrestrial network device, and the first location reservation pattern is used by the second non-terrestrial network device to perform communication transmission. The second non-terrestrial network device sends the first information to a first non-terrestrial network device.

In the foregoing technical solution, the second non-terrestrial network device determines the first information, and sends the first information to the first non-terrestrial network device. This helps the first non-terrestrial network device determine a proper location reservation pattern with reference to the first information, to avoid a case in which the first non-terrestrial network device and another non-terrestrial network device (for example, the second non-terrestrial network device) cover a same area or close areas at the same time, that is, avoid interference from the another non-terrestrial network device to a user located in the area. This reduces interference to a user that is on the ground and that is located in an overlapping coverage area of the non-terrestrial network device. In this way, a throughput of the user in the area is improved, and communication performance is improved.

According to the second aspect, in a possible implementation, before the second non-terrestrial network device sends the first information to the first non-terrestrial network device, the method further includes: The second non-terrestrial network device determines a weight parameter of at least one target non-terrestrial network device in a cluster in which the second non-terrestrial network device is located. The second non-terrestrial network device determines, based on the weight parameter of the at least one target non-terrestrial network device, an object to which the first information is to be sent, where the object to which the first information is to be sent includes the first non-terrestrial network device.

In this implementation, the second non-terrestrial network device may determine the weight parameter of the at least one target non-terrestrial network device, and determine, with reference to the weight parameter of the at least one target non-terrestrial network device, the object to which the first information is to be sent. For example, a value of a weight parameter of a non-terrestrial network device included in the object to which the first information is to be sent is less than a weight parameter of the second non-terrestrial network device. Usually, a non-terrestrial network device whose weight parameter is large has a large service volume, or has high service importance. Therefore, the second non-terrestrial network device may send the first information to a target non-terrestrial network device whose value of a weight parameter is less than the weight parameter of the second non-terrestrial network device. This helps the target non-terrestrial network device properly determine a location reservation pattern of the target non-terrestrial network device. This avoids interference caused by the target non-terrestrial network device to a user in a beam position for which the second non-terrestrial network device provides a service.

According to the second aspect, in a possible implementation, the at least one target non-terrestrial network device includes all non-terrestrial network devices in the cluster in which the second non-terrestrial network device is located; or the at least one target non-terrestrial network device includes a non-terrestrial network device adjacent to the second non-terrestrial network device.

In this implementation, a type of the at least one target non-terrestrial network device is shown. For example, the at least one target non-terrestrial network device includes all the non-terrestrial network devices in the cluster in which the second non-terrestrial network device is located. This helps all the non-terrestrial network devices obtain the first information of the second non-terrestrial network device. This helps all the non-terrestrial network devices obtain related information of more non-terrestrial network devices. This helps determine a proper location reservation pattern. For example, the at least one target non-terrestrial network device includes the non-terrestrial network device adjacent to the second non-terrestrial network device. Usually, there is a high probability that interference exists between adjacent non-terrestrial network devices. Therefore, the second non-terrestrial network device sends the first information to the non-terrestrial network device adjacent to the second non-terrestrial network device. This helps avoid interference between the second non-terrestrial network device and the non-terrestrial network device adjacent to the second non-terrestrial network device. In this way, the communication performance is improved.

According to the second aspect, in a possible implementation, that the second non-terrestrial network device determines a weight parameter of at least one target non-terrestrial network device in a cluster in which the second non-terrestrial network device is located includes: The second non-terrestrial network device receives the weight parameter from the at least one target non-terrestrial network device. In this implementation, the second non-terrestrial network device may obtain the weight parameter from the at least one target non-terrestrial network device. This helps the second non-terrestrial network device determine the object to which the first information of the second non-terrestrial network device is to be sent.

According to the second aspect, in a possible implementation, that the second non-terrestrial network device determines a weight parameter of at least one target non-terrestrial network device in a cluster in which the second non-terrestrial network device is located includes: The second non-terrestrial network device receives service status information from at least one area unit in an area covered by each of the at least one target non-terrestrial network device. The second non-terrestrial network device determines the weight parameter of the target non-terrestrial network device based on the service status information of the at least one area unit in the area covered by each target non-terrestrial network device.

In this implementation, the second non-terrestrial network device may determine the weight parameter of the target non-terrestrial network device with reference to the service status information of the at least one area unit in the area covered by each target non-terrestrial network device. This helps the second non-terrestrial network device determine the object to which the first information of the second non-terrestrial network device is to be sent.

According to the second aspect, in a possible implementation, before the second non-terrestrial network device sends the first information to the first non-terrestrial network device, the method further includes: The second non-terrestrial network device receives first indication information from a first network device, where the first indication information indicates an object to which the first information is to be sent, and the object to which the first information is to be sent includes the first non-terrestrial network device. In this implementation, the first network device may indicate, to the second non-terrestrial network device, the object to which the first information is to be sent. In this way, the second non-terrestrial network device may send the first information in a targeted manner. For example, the object to which the first information is to be sent and that is indicated by the first indication information may be a non-terrestrial network device adjacent to the second non-terrestrial network device. Usually, there is a high probability that interference exists between adjacent non-terrestrial network devices. Therefore, the second non-terrestrial network device sends the first information to the non-terrestrial network device adjacent to the second non-terrestrial network device. This helps avoid interference between the second non-terrestrial network device and the non-terrestrial network device adjacent to the second non-terrestrial network device. In this way, the communication performance is improved.

According to the second aspect, in a possible implementation, the object to which the first information is to be sent includes a non-terrestrial network device that is in the cluster in which the second non-terrestrial network device is located and that includes a weight parameter whose value is less than a value of the weight parameter of the second non-terrestrial network device. In this implementation, the weight parameter of the non-terrestrial network device may usually represent a service situation and a service status of the non-terrestrial network device. A larger weight parameter of the non-terrestrial network device indicates that a service of the non-terrestrial network device is more important or the non-terrestrial network device is more important. Therefore, the second non-terrestrial network device may send the first information to the non-terrestrial network device whose value of the weight parameter is less than the value of the weight parameter of the second non-terrestrial network device. This helps the first non-terrestrial network device determine a proper second location reservation pattern. This helps avoid interference between the second non-terrestrial network device and the first non-terrestrial network device. In this way, the communication performance is improved.

A third aspect of this application provides a location reservation pattern sending method. The method includes:

A first network device determines a first location reservation pattern, where the first location reservation pattern is used by a first non-terrestrial network device to perform communication transmission. The first network device sends first information to the first non-terrestrial network device, where the first information indicates the first location reservation pattern.

In the foregoing technical solution, the first network device determines the first location reservation pattern for the first non-terrestrial network device, and indicates the first location reservation pattern to the first non-terrestrial network device. In other words, the first network device determines the location reservation pattern for the first non-terrestrial network device. This helps avoid a case in which the first non-terrestrial network device and another non-terrestrial network device cover a same area or close areas at the same time, that is, avoid interference from the another non-terrestrial network device to a user located in the area. In this way, a throughput of the user in the area is improved, and communication performance is improved.

A fourth aspect of this application provides a location reservation pattern receiving method. The method includes:

A first non-terrestrial network device receives first information from a first network device, where the first information indicates a first location reservation pattern. The first non-terrestrial network device performs communication transmission based on the first location reservation pattern.

In the foregoing technical solution, the first non-terrestrial network device receives the first information from the first network device. The first non-terrestrial network device performs communication transmission based on the first location reservation pattern indicated by the first information. This helps avoid a case in which the first non-terrestrial network device and another non-terrestrial network device cover a same area or close areas at the same time, that is, avoid or reduce interference to a user located in the area. This reduces interference to a user that is on the ground and that is located in an overlapping coverage area of the non-terrestrial network device. In this way, a throughput of the user in the area is improved, and communication performance is improved.

According to the third aspect or the fourth aspect, in a possible implementation, the first location reservation pattern includes location information of an area unit for which the first non-terrestrial network device provides a service in a first time period. This helps the first non-terrestrial network device determine the area unit for which the service is provided in the first time period.

According to the third aspect or the fourth aspect, in a possible implementation, the location information includes an identifier of the area unit for which the first non-terrestrial network device provides the service in the first time period. In this way, overheads of indicating the area unit by the first network device are reduced.

According to the third aspect or the fourth aspect, in a possible implementation, the first location reservation pattern further includes a frequency band occupied by the first non-terrestrial network device in the first time period. In this implementation, in a scenario in which different non-terrestrial network devices perform communication by using different frequency bands, the first location reservation pattern may further include the frequency band occupied by the first non-terrestrial network device in the first time period. This helps the first non-terrestrial network device determine a frequency used by the first non-terrestrial network device, to avoid a case in which different non-terrestrial network devices cover a same area at the same time by using a same frequency band.

According to the third aspect or the fourth aspect, in a possible implementation, the area unit for which the first non-terrestrial network device provides the service in the first time period includes one or more beam positions, and the location information includes an identifier of the one or more beam positions; or the area unit for which the first non-terrestrial network device provides the service in the first time period corresponds to one or more beams, and the location information includes an identifier of the one or more beams. In this implementation, the first network device may indicate, by using the identifier of the one or more beam positions or the identifier of the one or more beams, the area for which the first non-terrestrial network device is to provide the service in the first time period. This helps reduce indication overheads.

According to the third aspect or the fourth aspect, in a possible implementation, that a first network device determines a first location reservation pattern includes:

The first network device determines the first location reservation pattern based on second information of each of at least one second non-terrestrial network device, where the second information of the second non-terrestrial network device includes one or more of the following: a second location reservation pattern, service status information of at least one area unit in an area covered by the second non-terrestrial network device, and service status information of the second non-terrestrial network device, and the second location reservation pattern is used by the second non-terrestrial network device to perform communication transmission.

In this implementation, the first network device may determine the first location reservation pattern with reference to the second information of each second non-terrestrial network device. This helps determine a proper location reservation pattern for the first non-terrestrial network device, to avoid a case in which the first non-terrestrial network device and another non-terrestrial network device (for example, the second non-terrestrial network device) cover a same area or close areas at the same time, that is, avoid or reduce interference to a user located in the area. This reduces interference to a user that is on the ground and that is located in an overlapping coverage area of the non-terrestrial network device. In this way, a throughput of the user in the area is improved, and communication performance is improved.

According to the third aspect, in a possible implementation, the first location reservation pattern is used by the first non-terrestrial network device to perform communication transmission in the first time period, the second location reservation pattern is used by the second non-terrestrial network device to perform communication transmission in a second time period, and the first time period overlaps the second time period. It can be learned that the first time period overlaps the second time period. In this application, the first network device determines the first location reservation pattern with reference to the second location reservation pattern. This helps avoid the interference to the user located in the same or close area covered by the first non-terrestrial network device and the second non-terrestrial network device at the same time, thereby improving the communication performance.

According to the third aspect or the fourth aspect, in a possible implementation, the at least one area unit is at least one beam position, and the service status information of the at least one area unit includes a beam position identifier and a service urgency value of each of the at least one beam position.

In this implementation, content of the service status information of the at least one area unit is shown. The service urgency value of each beam position indicates a service urgency situation of the beam position. This helps the first network device determine a proper first location reservation pattern for the first non-terrestrial network device. In this way, the first non-terrestrial network device properly avoids a beam position that is adjacent to a beam position of the first non-terrestrial network device and whose service urgency value is high. This helps the second non-terrestrial network device provide a service for these beam positions, thereby improving the communication performance. In addition, this helps the first network device adjust the first location reservation pattern of the first non-terrestrial network device for a time-varying and uneven service requirement of a terrestrial terminal device, so that the solution of this application is more applicable to a satellite communication scenario.

According to the third aspect or the fourth aspect, in a possible implementation, the service status information of the second non-terrestrial network device includes one or more of the following: a quantity of terminal devices currently served by the second non-terrestrial network device, a service volume of the terminal device, a service delay requirement of the terminal device, a quantity of beams provided by the second non-terrestrial network device, and a load, visible time, or a weight parameter of the second non-terrestrial network device. This helps the first network device determine, with reference to the service status information, a service situation of the terrestrial terminal device in the area covered by the second non-terrestrial device. This helps the first network device determine the proper first location reservation pattern for the first non-terrestrial network device for the time-varying and uneven service requirement of the terrestrial terminal device, to avoid interference from the first non-terrestrial network device to a user in an area covered by the at least one second non-terrestrial network device, so that the solution of this application is more applicable to the satellite communication scenario.

According to the third aspect or the fourth aspect, in a possible implementation, there is an association relationship between the first non-terrestrial network device and the at least one second non-terrestrial network device. In this implementation, the first non-terrestrial network device is associated with the at least one second non-terrestrial network device. This helps the first network device determine the proper location reservation pattern, to avoid the case in which the first non-terrestrial network device and the at least one second non-terrestrial network device cover the same area or the close areas at the same time, that is, avoid the interference to the user located in the area. In this way, the throughput of the user in the area is improved, and the communication performance is improved.

According to the third aspect or the fourth aspect, in a possible implementation, that there is an association relationship between the first non-terrestrial network device and the at least one second non-terrestrial network device includes: A value of a weight parameter of the first non-terrestrial network device is less than a value of a weight parameter corresponding to each of the at least one second non-terrestrial network device, and/or the at least one second non-terrestrial network device is a non-terrestrial network device adjacent to the first non-terrestrial network device.

In this implementation, some representation forms of the association between the first non-terrestrial network device and the at least one second non-terrestrial network device are shown. For example, the value of the weight parameter of the first non-terrestrial network device is less than the value of the weight parameter corresponding to each of the at least one second non-terrestrial network device. In other words, the first network device may determine the first location reservation pattern with reference to the first information of the second non-terrestrial network device whose weight parameter is large. Usually, a non-terrestrial network device whose weight parameter is large has a large service volume, or has high service importance. This avoids interference caused by the first non-terrestrial network device to a user in a beam position for which the second non-terrestrial network device provides a service. For example, the at least one second non-terrestrial network device is the non-terrestrial network device adjacent to the first non-terrestrial network device. The first network device may determine the first location reservation pattern with reference to the first information of the non-terrestrial network device adjacent to the first non-terrestrial network device. This avoids the interference caused by the first non-terrestrial network device to the user in the beam position for which the second non-terrestrial network device provides the service.

According to the third aspect or the fourth aspect, in a possible implementation, the method further includes: The first network device receives the second information from each of the at least one second non-terrestrial network device. In this implementation, the first network device may obtain the second information from the at least one second non-terrestrial network device. This helps determine the proper first location reservation pattern for the first non-terrestrial network device, thereby improving the communication performance.

A fifth aspect of this application provides a communication apparatus, including:
a transceiver module, configured to obtain first information of each of at least one second non-terrestrial network device, where the first information of the second non-terrestrial network device includes one or more of the following: a first location reservation pattern, service status information of at least one area unit in an area covered by the second non-terrestrial network device, and service status information of the second non-terrestrial network device, and the first location reservation pattern is used by the second non-terrestrial network device to perform communication transmission; and
a processing module, configured to determine a second location reservation pattern based on the first information of each second non-terrestrial network device, where the second location reservation pattern is used by the communication apparatus to perform communication transmission.

According to the fifth aspect, in a possible implementation, the first location reservation pattern is used by the communication apparatus to perform communication transmission in a first time period, the second location reservation pattern is used by the second non-terrestrial network device to perform communication transmission in second time, and the first time period overlaps the second time period.

According to the fifth aspect, in a possible implementation, there is an association relationship between the communication apparatus and the at least one second non-terrestrial network device.

According to the fifth aspect, in a possible implementation, that there is an association relationship between the communication apparatus and the at least one second non-terrestrial network device includes: A value of a weight parameter of the communication apparatus is less than a value of a weight parameter corresponding to each of the at least one second non-terrestrial network device, and/or the at least one second non-terrestrial network device is a non-terrestrial network device adjacent to the communication apparatus.

According to the fifth aspect, in a possible implementation, the weight parameter of the communication apparatus is determined based on service status information of the communication apparatus, or is determined based on service status information of at least one area unit in an area covered by the communication apparatus.

According to the fifth aspect, in a possible implementation, the first location reservation pattern includes location information of an area unit for which the second non-terrestrial network device provides a service in the first time period.

According to the fifth aspect, in a possible implementation, the location information includes an identifier of the area unit for which the second non-terrestrial network device provides the service in the first time period. In this way, overheads of indicating the area unit by the second non-terrestrial network device are reduced.

According to the fifth aspect, in a possible implementation, the first location reservation pattern further includes a frequency band occupied by the second non-terrestrial network device in the first time period.

According to the fifth aspect, in a possible implementation, the area unit for which the second non-terrestrial network device provides the service in the first time period includes one or more beam positions, and the location information includes an identifier of the one or more beam positions; or the area unit for which the second non-terrestrial network device provides the service in the first time period corresponds to one or more beams, and the location information includes an identifier of the one or more beams.

According to the fifth aspect, in a possible implementation, the at least one area unit is at least one beam position, and the service status information of the at least one area unit includes a beam position identifier and a service urgency value of each of the at least one beam position.

According to the fifth aspect, in a possible implementation, the service status information of the second non-terrestrial network device includes one or more of the following: a quantity of terminal devices served by the second non-terrestrial network device, a service volume of the terminal device, a service delay requirement of the terminal device, a quantity of beams provided by the second non-terrestrial network device, and a load, visible time, or the weight parameter of the second non-terrestrial network device.

According to the fifth aspect, in a possible implementation, the transceiver module is specifically configured to:
receive the first information from each of the at least one second non-terrestrial network device; or
receive the first information of each of the at least one second non-terrestrial network device from a first network device.

According to the fifth aspect, in a possible implementation, the processing module is specifically configured to:
when the communication apparatus joins a cluster in which the at least one second non-terrestrial network device is located, determine the second location reservation pattern based on the first information of each second non-terrestrial network device.

According to the fifth aspect, in a possible implementation, the processing module is further configured to update the weight parameter of the communication apparatus and/or the service status information of the at least one area unit.

According to the fifth aspect, in a possible implementation, the processing module is further configured to:
update the weight parameter of the communication apparatus and/or the service status information of the at least one area unit, where a value of an updated weight parameter is less than a first threshold, and a service urgency value indicated in updated service status information of the at least one area unit is less than a second threshold.

The transceiver module is further configured to send the updated weight parameter and/or the updated service status information of the at least one area unit.

The processing module is further configured to exit a cluster in which the first non-terrestrial network device is currently located.

A sixth aspect of this application provides a communication apparatus, including:
a processing module, configured to determine first information of the communication apparatus, where the first information includes one or more of the following: a first location reservation pattern, service status information of at least one area unit in an area covered by the communication apparatus, and service status information of the communication apparatus, and the first location reservation pattern is used by the communication apparatus to perform communication transmission; and
a transceiver module, configured to send the first information to a first non-terrestrial network device.

According to the sixth aspect, in a possible implementation, the processing module is further configured to:
determine a weight parameter of at least one target non-terrestrial network device in a cluster in which the communication apparatus is located; and
determine, based on the weight parameter of the at least one target non-terrestrial network device, an object to which the first information is to be sent, where the object to which the first information is to be sent includes the first non-terrestrial network device.

According to the sixth aspect, in a possible implementation, the at least one target non-terrestrial network device includes all non-terrestrial network devices in the cluster in which the communication apparatus is located; or the at least one target non-terrestrial network device includes a non-terrestrial network device adjacent to the communication apparatus.

According to the sixth aspect, in a possible implementation, the processing module is specifically configured to:
receive the weight parameter from the at least one target non-terrestrial network device.

According to the sixth aspect, in a possible implementation, the processing module is specifically configured to:
receive service status information from at least one area unit in an area covered by each of the at least one target non-terrestrial network device; and
determine the weight parameter of the target non-terrestrial network device based on the service status information of the at least one area unit in the area covered by each target non-terrestrial network device.

According to the sixth aspect, in a possible implementation, the transceiver module is further configured to:
receive first indication information from a first network device, where the first indication information indicates an object to which the first information is to be sent, and the object to which the first information is to be sent includes the first non-terrestrial network device.

According to the sixth aspect, in a possible implementation, the object to which the first information is to be sent includes a non-terrestrial network device that is in the cluster in which the communication apparatus is located and that includes a weight parameter whose value is less than a value of a weight parameter of the communication apparatus.

A seventh aspect of this application provides a communication apparatus, including:
a processing module, configured to determine a first location reservation pattern, where the first location reservation pattern is used by a first non-terrestrial network device to perform communication transmission; and
a transceiver module, configured to send first information to the first non-terrestrial network device, where the first information indicates the first location reservation pattern.

According to the seventh aspect, in a possible implementation, the first location reservation pattern includes location information of an area unit for which the first non-terrestrial network device provides a service in a first time period.

According to the seventh aspect, in a possible implementation, the location information includes an identifier of the area unit for which the first non-terrestrial network device provides the service in the first time period.

According to the seventh aspect, in a possible implementation, the first location reservation pattern further includes a frequency band occupied by the first non-terrestrial network device in the first time period.

According to the seventh aspect, in a possible implementation, the area unit for which the first non-terrestrial network device provides the service in the first time period includes one or more beam positions, and the location information includes an identifier of the one or more beam positions; or the area unit for which the first non-terrestrial network device provides the service in the first time period corresponds to one or more beams, and the location information includes an identifier of the one or more beams.

According to the seventh aspect, in a possible implementation, the processing module is specifically configured to:
determine the first location reservation pattern based on second information of each of at least one second non-terrestrial network device, where the second information of the second non-terrestrial network device includes one or more of the following: a second location reservation pattern, service status information of at least one area unit in an area covered by the second non-terrestrial network device, and service status information of the second non-terrestrial network device, and the second location reservation pattern is used by the second non-terrestrial network device to perform communication transmission.

According to the seventh aspect, in a possible implementation, the first location reservation pattern is used by the first non-terrestrial network device to perform communication transmission in the first time period, the second location reservation pattern is used by the second non-terrestrial network device to perform communication transmission in a second time period, and the first time period overlaps the second time period.

According to the seventh aspect, in a possible implementation, the at least one area unit is at least one beam position, and the service status information of the at least one area unit includes a beam position identifier and a service urgency value of each of the at least one beam position.

According to the seventh aspect, in a possible implementation, the service status information of the second non-terrestrial network device includes one or more of the following: a quantity of terminal devices currently served by the second non-terrestrial network device, a service volume of the terminal device, a service delay requirement of the terminal device, a quantity of beams provided by the second non-terrestrial network device, and a load, visible time, or a weight parameter of the second non-terrestrial network device.

According to the seventh aspect, in a possible implementation, there is an association relationship between the first non-terrestrial network device and the at least one second non-terrestrial network device.

According to the seventh aspect or an eighth aspect, in a possible implementation, that there is an association relationship between the first non-terrestrial network device and the at least one second non-terrestrial network device includes: A value of a weight parameter of the first non-terrestrial network device is less than a value of a weight parameter corresponding to each of the at least one second non-terrestrial network device, and/or the at least one second non-terrestrial network device is a non-terrestrial network device adjacent to the first non-terrestrial network device.

According to the seventh aspect, in a possible implementation, the transceiver module is further configured to receive the second information from each of the at least one second non-terrestrial network device.

The eighth aspect of this application provides a communication apparatus, including:
a transceiver module, configured to receive first information from a first network device, where the first information indicates a first location reservation pattern; and
a processing module, configured to perform communication transmission based on the first location reservation pattern.

According to the eighth aspect, in a possible implementation, the first location reservation pattern includes location information of an area unit for which the communication apparatus provides a service in a first time period.

According to the eighth aspect, in a possible implementation, the location information includes an identifier of the area unit for which the communication apparatus provides the service in the first time period.

According to the eighth aspect, in a possible implementation, the first location reservation pattern further includes a frequency band occupied by the communication apparatus in the first time period.

According to the eighth aspect, in a possible implementation, the area unit for which the communication apparatus provides the service in the first time period includes one or more beam positions, and the location information includes an identifier of the one or more beam positions; or the area unit for which the communication apparatus provides the service in the first time period corresponds to one or more beams, and the location information includes an identifier of the one or more beams.

According to the eighth aspect, in a possible implementation, at least one area unit is at least one beam position, and service status information of the at least one area unit includes a beam position identifier and a service urgency value of each of the at least one beam position.

According to the eighth aspect, in a possible implementation, service status information of a second non-terrestrial network device includes one or more of the following: a quantity of terminal devices currently served by the second non-terrestrial network device, a service volume of the terminal device, a service delay requirement of the terminal device, a quantity of beams provided by the second non-terrestrial network device, and a load, visible time, or a weight parameter of the second non-terrestrial network device.

According to the eighth aspect, in a possible implementation, there is an association relationship between the communication apparatus and at least one second non-terrestrial network device.

According to the eighth aspect, in a possible implementation, that there is an association relationship between the communication apparatus and at least one second non-terrestrial network device includes: A value of a weight parameter of the communication apparatus is less than a value of a weight parameter corresponding to each of the at least one second non-terrestrial network device, and/or the at least one second non-terrestrial network device is a non-terrestrial network device adjacent to the communication apparatus.

A ninth aspect of embodiments of this application provides a communication apparatus. The communication apparatus includes a processor and a memory. The memory stores a computer program. The processor is configured to invoke and run the computer program stored in the memory, to enable the processor to implement any implementation of the first aspect, the second aspect, or the fourth aspect.

Optionally, the communication apparatus further includes a transceiver. The processor is further configured to control the transceiver to receive and send a signal.

A tenth aspect of embodiments of this application provides a communication apparatus. The communication apparatus includes a processor and a memory. The memory stores a computer program. The processor is configured to invoke and run the computer program stored in the memory, to enable the processor to implement any implementation of the third aspect.

Optionally, the communication apparatus further includes a transceiver. The processor is further configured to control the transceiver to receive and send a signal.

An eleventh aspect of embodiments of this application provides a communication apparatus. The communication apparatus includes a logic circuit and an input/output interface. The logic circuit is configured to perform the processing operation in any implementation of the first aspect, the second aspect, or the fourth aspect. The input/output interface is configured to perform the receiving and sending operations in any implementation of the first aspect, the second aspect, or the fourth aspect.

A twelfth aspect of embodiments of this application provides a communication apparatus. The communication apparatus includes a logic circuit and an input/output interface. The logic circuit is configured to perform the processing operation in any implementation of the third aspect. The input/output interface is configured to perform the receiving and sending operations in any implementation of the third aspect.

A thirteenth aspect of embodiments of this application provides a computer program product including instructions. When the computer program product runs on a computer, the computer is enabled to perform any implementation of the first aspect to the fourth aspect.

A fourteenth aspect of embodiments of this application provides a computer-readable storage medium, including computer instructions. When the computer instructions are run on a computer, the computer is enabled to perform any implementation of the first aspect to the fourth aspect.

A fifteenth aspect of embodiments of this application provides a chip apparatus, including a processor, configured to: be connected to a memory, and invoke a program stored in the memory, to enable the processor to perform any implementation of the first aspect to the fourth aspect.

A sixteenth aspect of embodiments of this application provides a communication system. The communication system includes the communication apparatus according to the first aspect and the communication apparatus according to the second aspect; or the communication system includes the communication apparatus according to the third aspect and the communication apparatus according to the fourth aspect.

It can be learned from the foregoing technical solution that the first non-terrestrial network device obtains the first information of each of the at least one second non-terrestrial network device. The first information of the second non-terrestrial network device includes one or more of the following: the first location reservation pattern, the service status information of the at least one area unit in the area covered by the second non-terrestrial network device, and the service status information of the second non-terrestrial network device. The first location reservation pattern is used by the second non-terrestrial network device to perform the communication transmission. The first non-terrestrial network device determines the second location reservation pattern based on the first information of each second non-terrestrial network device. The second location reservation pattern is used by the first non-terrestrial network device to perform the communication transmission. It can be learned that the first non-terrestrial network device may determine the second location reservation pattern with reference to the first information of each second non-terrestrial network device. This helps the first non-terrestrial network device determine the proper location reservation pattern, to avoid the interference from the another non-terrestrial network device to the user located in the same or close area covered by the first non-terrestrial network device and the another non-terrestrial network device (for example, the second non-terrestrial network device) at the same time, that is, avoid or reduce the interference to the user that is on the ground and that is located in the overlapping coverage area of the non-terrestrial network device. In this way, the throughput of the user in the area is improved, and the communication performance is improved.

### BRIEF DESCRIPTION OF DRAWINGS

FIG. 1A is a diagram of a first architecture of a communication system according to an embodiment of this application;
FIG. 1B is a diagram of a second architecture of a communication system according to an embodiment of this application;
FIG. 1C is a diagram of a third architecture of a communication system according to an embodiment of this application;
FIG. 2 is a diagram of satellites in a cluster according to an embodiment of this application;
FIG. 3 is a diagram of beam positions served by a satellite at a moment t1 and beam positions served at a moment t2 according to an embodiment of this application;
FIG. 4 is a diagram of beam positions covered by a satellite 1 at a moment 1 and beam positions covered by a satellite 2 at the moment 1 according to an embodiment of this application;
FIG. 5 is a diagram of an embodiment of a location reservation pattern determining method according to an embodiment of this application;
FIG. 6 is a diagram of another embodiment of a location reservation pattern determining method according to an embodiment of this application;
FIG. 7A is a diagram of a scenario of a location reservation pattern determining method according to an embodiment of this application;
FIG. 7B is a diagram of another scenario of a location reservation pattern determining method according to an embodiment of this application;
FIG. 8 is a diagram of an embodiment of a location reservation pattern sending method and a location reservation pattern receiving method according to an embodiment of this application;
FIG. 9 is a diagram of a first structure of a communication apparatus according to an embodiment of this application;
FIG. 10 is a diagram of a second structure of a communication apparatus according to an embodiment of this application;
FIG. 11 is a diagram of a third structure of a communication apparatus according to an embodiment of this application;
FIG. 12 is a diagram of a fourth structure of a communication apparatus according to an embodiment of this application;
FIG. 13 is a diagram of a fifth structure of a communication apparatus according to an embodiment of this application;
FIG. 14 is a diagram of a sixth structure of a communication apparatus according to an embodiment of this application; and
FIG. 15 is a diagram of a seventh structure of a communication apparatus according to an embodiment of this application.

### DESCRIPTION OF EMBODIMENTS

This application provides a location reservation pattern determining method, a location reservation pattern sending method, a location reservation pattern receiving method, and a related apparatus, to avoid interference to a user located in a same or close area covered by a first non-terrestrial network device and another non-terrestrial network device (for example, a second non-terrestrial network device) at the same time. This avoids or reduces interference to a user that is on the ground and that is located in an overlapping coverage area of the non-terrestrial network device. In this way, a throughput of the user in the area is improved, and communication performance is improved.

Reference to "an embodiment", "some embodiments", or the like described in this specification indicates that one or more embodiments of this application include a specific feature, structure, or characteristic described with reference to the embodiment. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "including but not limited to", unless otherwise specifically emphasized in another manner.

In this application, "at least one" means one or more, and "a plurality of" means two or more. The term "and/or" describes an association relationship between associated objects and represents that three relationships may exist. For example, A and/or B may represent the following three cases: Only A exists, both A and B exist, and only B exists. A and B may be singular or plural. "At least one of the following items (pieces)" or a similar expression thereof indicates any combination of these items, including a single item (piece) or any combination of a plurality of items (pieces). For example, at least one of a, b, or c may represent a, b, c, a and b, a and c, b and c, or a, b, and c, where a, b, and c may be singular or plural.

With development of information technologies, a modern communication system imposes more urgent requirements on communication efficiency, mobility, diversity, and the like. Currently, in some important application scenarios, for example, in the fields of space communication, aviation communication, and the like, NTN communication, represented by non-terrestrial devices such as satellites, unmanned aerial vehicles, and high-altitude platforms, plays an irreplaceable role.

For ease of description, the following uses a non-terrestrial device represented by a satellite as an example for description.

Satellite communication features a long communication distance, a large coverage area, flexible networking, and the like. The satellite can provide communication services for both fixed terminals and various mobile terminals. A conventional terrestrial network cannot provide seamless coverage for terminal devices, especially in places in which a base station cannot be deployed, such as in seas, in deserts, or in the air. Therefore, an NTN is introduced into a 5th generation (the 5th generation, 5G) mobile communication system, and the NTN provides seamless coverage communication for the terminal devices by deploying the base station or some functions of the base station on the high-altitude platform or the satellite. In addition, the high-altitude platform or the satellite is less subject to natural disasters, so that reliability of the 5G system can be improved. In an NTN deployed based on the satellite, the satellite covers the ground by using different beams, to form a satellite cell, and a terminal device may be covered by a plurality of satellite cells at a same moment.

Satellite communication systems may be classified into the following three types based on orbital heights of the satellites:
a geostationary earth orbit (geostationary earth orbit, GEO) satellite communication system, also referred to as a synchronous orbit satellite system, a medium earth orbit (medium earth orbit, MEO) satellite communication system, and a low earth orbit (low earth orbit, LEO) satellite communication system.

A GEO satellite has an orbital height of 35786 km. A main advantage is that the GEO satellite can remain stationary relative to the ground and provide a large coverage area. Disadvantages are as follows: (1) An orbit of the GEO satellite is far away from the earth, and a free space propagation loss is large. As a result, a communication link budget is tight. To increase a transmit/receive gain, an antenna with a large diameter needs to be configured for the satellite. (2) A communication transmission delay is long, and round trip time may reach about 500 ms. This cannot meet requirements of real-time services. (3) The GEO has limited orbit resources and high transmission costs, and cannot provide coverage for polar regions of the earth.

An MEO satellite has an orbital height of 2000 km to 35786 km. An advantage is that global coverage can be implemented by using a smaller quantity of satellites. However, the MEO satellite has a higher orbital height than the LEO, and a transmission delay is still longer than that of LEO satellite communication. Based on the advantage and disadvantage of MEO satellite communication, the MEO satellite is mainly used for positioning and navigation.

An LEO satellite has an orbital height of 300 km to 2000 km. The LEO satellite has a lower orbital height than the MEO and the GEO, and has advantages of a short data transmission delay, a small transmission loss, and low transmission costs. To improve an overall signal processing capability and communication throughput of a satellite network, a satellite operator increases a quantity of satellites to make up for a limitation of a single satellite in a communication capability. In a future NTN communication system, after a terminal device accesses the system, within a period of time, a plurality of satellites that can communicate with the terminal device and the terminal device are "visible" to each other. In this case, all the plurality of satellites may provide a communication service for the terminal device. This provides a basic condition for multi-satellite coordinated transmission.

The technical solutions in this application may be applied to various communication systems, for example, a satellite communication system, a system integrating satellite communication and a cellular network, or a high-altitude platform station (high-altitude platform station, HAPS) communication system.

A cellular network system may include but is not limited to a 5G system, a general packet radio service (general packet radio service, GPRS) system, a long term evolution (long term evolution, LTE) system, an LTE frequency division duplex (frequency division duplex, FDD) system, an LTE time division duplex (time division duplex, TDD) system, an advanced long term evolution (advanced long term evolution, LTE-A) system, a new radio (new radio, NR) system, an evolved system of the NR system, an LTE-based access to unlicensed spectrum (LTE-based access to unlicensed spectrum, LTE-U) system, an NR-based access to unlicensed spectrum (NR-based access to unlicensed spectrum, NR-U) system, a wireless fidelity (wireless fidelity, Wi-Fi) system, a next-generation communication system, another communication system, or the like. Usually, a conventional communication system supports a finite quantity of connections and is easy to implement. However, with development of communication technologies, a mobile communication system not only supports conventional communication, but also supports, for example, device-to-device (device-to-device, D2D) communication, machine-to-machine (machine-to-machine, M2M) communication, machine type communication (machine type communication, MTC), vehicle-to-vehicle (vehicle-to-vehicle, V2V) communication, and other future evolved communication systems. Embodiments of this application may also be applied to these communication systems.

The satellite communication system may include various non-terrestrial network systems, for example, networks in which radio frequency transmission is performed by a satellite, an unmanned aircraft system (unmanned aircraft system, UAS) platform, or the like. This is not listed one by one herein.

The high-altitude platform station communication system may include: an integrated communication and navigation (integrated communication and navigation, IcaN) system, a global navigation satellite system (global navigation satellite system, GNSS), an ultra-dense low earth orbit satellite communication system, and the like.

The following uses an NTN system as an example to describe some possible application scenarios of this application. The NTN system may be a satellite communication system or another non-terrestrial network system. This is not specifically limited in this application.

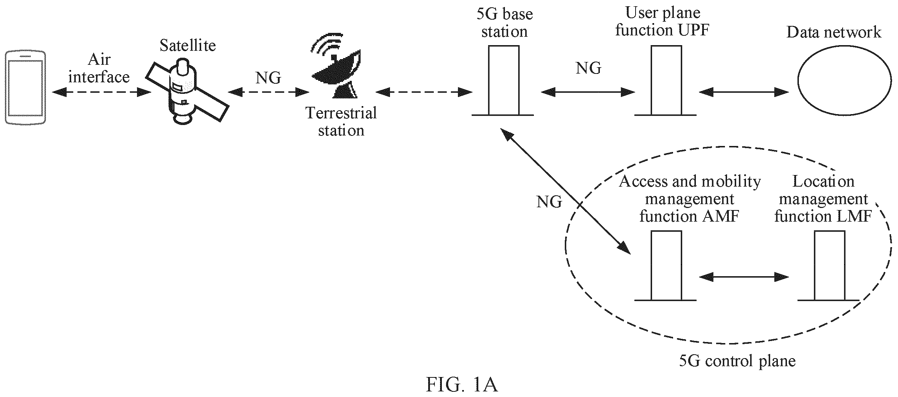

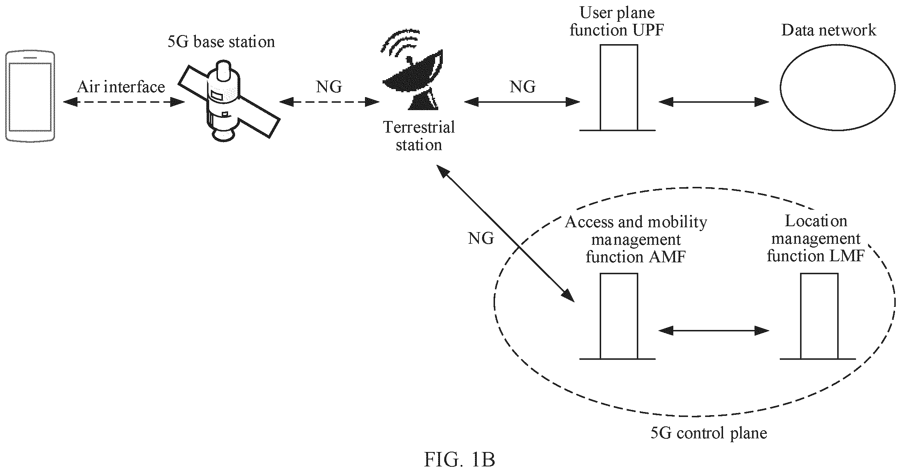

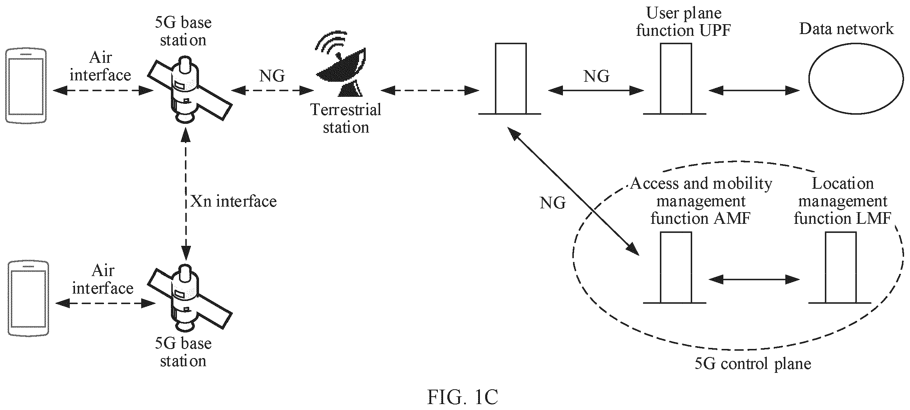

Refer to FIG. 1A, FIG. 1B, and FIG. 1C. A 5G communication system is used as an example. FIG. 1A, FIG. 1B, and FIG. 1C are diagrams of architectures of several communication systems according to embodiments of this application.

As shown in FIG. 1A, FIG. 1B, and FIG. 1C, there may be one or more terminal devices (for example, mobile terminals) and/or network devices (for example, 5G base stations) in a coverage area of a cell of a satellite. The coverage area of the cell may be an area covered by one or more beams of the satellite, or an area at a same level as a cell in an NR system.

In FIG. 1A, the terrestrial terminal device (for example, the mobile terminal) accesses a network through an air interface, and the network device (for example, the 5G base station) may be deployed on the ground, directly connected to a terrestrial 5G core network through a radio link, and connected to a terrestrial station for satellite communication. This type of communication architecture is also referred to as a transparent satellite network architecture. Therefore, the base station is on the ground. In addition, a radio link exists between satellites, to complete signaling exchange and user data transmission between base stations.

In FIG. 1B, the terrestrial terminal device (for example, the mobile terminal) accesses a network through an air interface, and the network device (for example, the 5G base station) may be deployed on the satellite, and connected to a terrestrial 5G core network through a radio link and a terrestrial station. This type of communication architecture is also referred to as a regenerative satellite network architecture. Therefore, the base station or some functions of the base station are on the satellite. In addition, a radio link exists between satellites, to complete signaling exchange and user data transmission between base stations.

In FIG. 1C, the terrestrial terminal device (for example, the mobile terminal) accesses a network through an air interface, and the network device (for example, the 5G base station) or some functions of the network device (for example, the 5G base station) are deployed on the satellite, and connected to a terrestrial 5G core network through a radio link and a terrestrial station. Some functions of the network device (for example, the 5G base station) are deployed on the ground, directly connected to the terrestrial 5G core network through a radio link, and connected to the terrestrial station for satellite communication. Therefore, in this type of communication architecture, the base station or some functions of the base station are respectively on the satellite and the ground. In addition, a communication link exists between satellites, to complete signaling exchange and user data transmission between base stations.

It may be understood that in actual deployment, the satellite in the foregoing system may be replaced with another NTN device like a high-altitude platform station (high-altitude platform station, HAPS). This is not limited in this application.

Network elements in the scenario and their interfaces are described as follows.

The terminal device is a mobile device supporting 5G new radio, typically, for example, a user terminal or a wearable device, and may access a satellite network through an air interface and initiate call, internet access, and other services.

The 5G base station mainly provides a radio access service, schedules a radio resource for an access terminal, provides a reliable radio transmission protocol and data encryption protocol, and the like.

The 5G core network provides services such as user access control, mobility management, session management, user security authentication, and charging. The 5G core network includes a plurality of functional units, and may be divided into a control plane function entity and a data plane function entity. An access and mobility management function (access and mobility management function, AMF) is responsible for user access management, security authentication, and mobility management. A location management function (location management function, LMF) is responsible for managing and controlling a location service request of a target terminal, and processing location-related information. A user plane function (user plane function, UPF) is responsible for managing functions such as user plane data transmission and traffic statistics.

The terrestrial station is responsible for forwarding signaling and service data between the satellite base station and the 5G core network.

The 5G new radio is a radio link between the terminal device and the base station.

An Xn interface is an interface between 5G base stations and is mainly configured for signaling exchange such as switching.

An NG interface is an interface between the 5G base station and the 5G core network, and is mainly for exchanging non-access stratum (non-access stratum, NAS) and other signaling of the core network and user service data.

It should be further noted that in this application, the descriptions "satellite" and "satellite network device" are equivalent.

It may be understood that a cell in the NTN system may be a projection area of a beam of a satellite on the ground, may be projection areas of a plurality of beams of the satellite on the ground, or may be a part of a projection area of one or more beams on the ground. This is not limited in embodiments of this application.

A communication system to which this application is applicable includes a first non-terrestrial network device and at least one second non-terrestrial network device. Alternatively, a communication system to which this application is applicable includes a first non-terrestrial network device and a first network device.

The following describes the network device and the non-terrestrial network device in this application.

The network device may be a core network device. For example, the network device is an AMF or a session management function (session management function, SMF). The network device may alternatively be an access network device. For example, the network device supports access by a terminal device and provides a communication service for the terminal device. For example, the network device may be a terrestrial device like an evolved NodeB (evolved NodeB, eNB) in a 4G access technology communication system, a next generation NodeB (next generation NodeB, gNB) in a 5G access technology communication system, a transmission reception point (transmission reception point, TRP), a relay node (relay node), an access point (access point, AP), or a gateway (gateway). For example, the gateway is used for communication between the terminal device and a core network, for example, a terrestrial station. Alternatively, the network device may be a non-terrestrial device: a high-altitude base station, for example, a device like a hot air balloon that can provide a wireless access function for the terminal device, a satellite base station, a satellite relay node, a management satellite in a cluster, a low earth orbit satellite, a medium earth orbit satellite, or a high earth orbit satellite, may be an unmanned aerial vehicle, or may be a mobile switching center, a device that functions as a base station in device-to-device (device-to-device, D2D), vehicle-to-everything (vehicle-to-everything, V2X), or machine-to-machine (machine-to-machine, M2M) communication, or the like.

The non-terrestrial network device may be a high-altitude base station, for example, a device like a hot air balloon that can provide a wireless access function for the terminal device, a satellite base station, a satellite relay node, a low earth orbit satellite, a medium earth orbit satellite, or a high earth orbit satellite, may be an unmanned aerial vehicle, or may be a mobile switching center, a device that functions as a base station in D2D, V2X, or M2M communication, or the like.

The following describes technical terms in this application.

Beam: The beam is a communication resource. The beam may be a wide beam, a narrow beam, or a beam of another type, and a technology for forming the beam may be a beamforming technology or another technical means. The beamforming technology may be specifically a digital beamforming technology, an analog beamforming technology, and a hybrid digital/analog beamforming technology. Different beams may be considered as different resources. Same information or different information may be sent by using different beams. Optionally, a plurality of beams that have a same communication feature or similar communication features may be considered as one beam. One beam may include one or more antenna ports, configured for a transmission channel, a control channel, a sounding signal, and the like. For example, a transmit beam may be signal strength distribution formed in different directions in space after a signal is transmitted by an antenna, and a receive beam may be signal strength distribution in different directions in space of a radio signal received from the antenna. It may be understood that the one or more antenna ports forming one beam may alternatively be considered as one antenna port set. The beam may alternatively be represented as a spatial filter (spatial filter) in a protocol.

Beam position: The beam position is a possible form of an area unit covered by a non-terrestrial network device. One beam position may be an area covered by sending one or more beams by the non-terrestrial network device. In other words, one beam position corresponds to the one or more beams. For example, the non-terrestrial network device may cover one beam position by sending the one or more beams. One beam may correspond to one or more beam positions. For example, one beam corresponds to one beam position, that is, the non-terrestrial network device may cover the beam position by sending the beam. For example, one beam corresponds to two beam positions, that is, the non-terrestrial network device may cover the two beam positions by sending the beam.

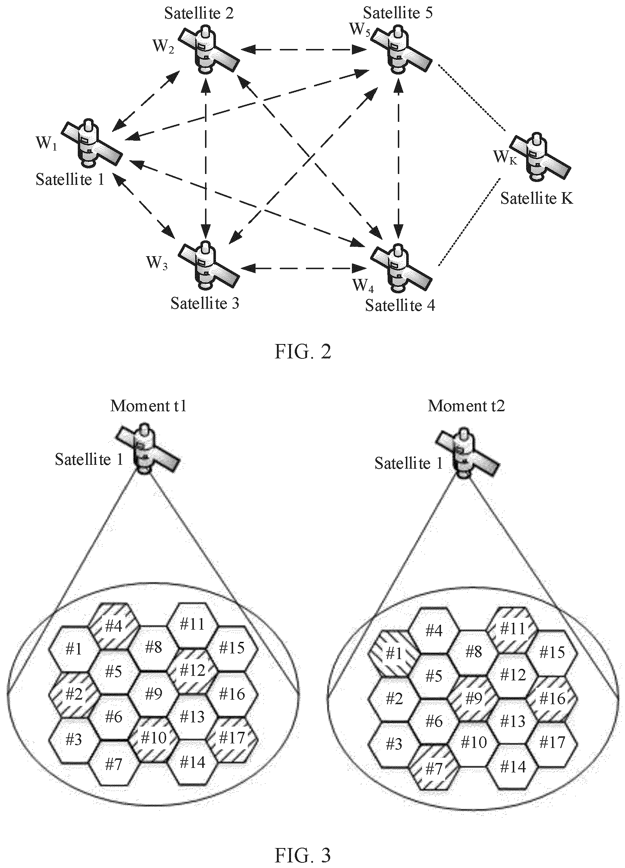

Location reservation pattern: The location reservation pattern includes location information of an area unit for which a satellite may provide a service in at least one time period. To be specific, the satellite reserves at least one area unit in the at least one time period, and the satellite may provide a service for the at least one area unit by sending a beam to the at least one area unit in the at least one time period. In actual application, the satellite may not provide the service for the at least one area unit in the at least one time period. For example, when a terminal device located in the at least one area unit has no service requirement, the satellite may not provide the service for the at least one area unit in the at least one time period. Alternatively, when a terminal device in another area unit other than the at least one area unit covered by the satellite has a service requirement, the satellite does not provide the service for the at least one area unit in the at least one time period, but the satellite may provide a service for the another area unit in the at least one time period. For example, as shown in FIG. 3, the location reservation pattern includes a time period T and beam position identifiers respectively corresponding to a beam position #2, a beam position #4, a beam position #10, a beam position #12, and a beam position #17. That is, the satellite may provide a service for the beam position #2, the beam position #4, the beam position #10, the beam position #12, and the beam position #17 in the time period T. Actually, the satellite may alternatively not provide a service for at least one of the beam position #2, the beam position #4, the beam position #10, the beam position #12, and the beam position #17 in the time period T. Optionally, the location reservation pattern further includes a frequency band occupied by the satellite in the at least one time period.

It should be noted that, in this application, the location reservation pattern may also be referred to as a beam hopping pattern (beam hopping pattern) or another name. This is not specifically limited in this application.

FIG. 2 is a diagram of satellites in a cluster. As shown in FIG. 2, satellites in an area may form a cluster. The cluster includes K satellites, and K is an integer greater than or equal to 1. Optionally, the area may belong to a core network.

A coverage area of a single satellite is wide, which can reach thousands or even tens of thousands of kilometers. To support wide-area coverage, hundreds or even thousands of beams need to be configured for the single satellite, but this poses a great challenge to a satellite load. A beam hopping technology is an important technology in satellite communication, and helps reduce a load weight of the satellite, meet a time-varying and uneven service requirement of a terrestrial network, and the like. The beam hopping technology is mainly used to divide an area covered by the satellite on the ground into a plurality of beam positions, and the satellite covers the plurality of beam positions in a time-division manner. At a specific moment, the satellite serves only a part of the beam positions on the ground to reduce the satellite load and support the wide-area coverage.

For example, as shown in FIG. 3, the satellite serves only the beam position #2, the beam position #4, the beam position #10, the beam position #12, and the beam position #17 on the ground at a moment t1. Optionally, one beam position corresponds to one beam. That is, the satellite may simultaneously send five beams at the moment t1 to serve the beam position #2, the beam position #4, the beam position #10, the beam position #12, and the beam position #17 on the ground. The satellite serves only a beam position #1, a beam position #7, a beam position #9, a beam position #1, and a beam position #16 on the ground at a moment t2. Optionally, one beam position corresponds to one beam. That is, the satellite serves only the beam position #1, the beam position #7, the beam position #9, the beam position #11, and the beam position #16 on the ground at the moment t2. By analogy, the satellite may serve, in a time-division manner, all areas covered by the satellite.

However, due to a large quantity of satellites, coverage areas of the plurality of satellites are likely to overlap. If coverage areas of two satellites overlap, and the two satellites both serve an overlapping area (that is, an overlapping beam position) at a specific moment, a user that is of one of the two satellites and that is located in the overlapping area is extremely vulnerable to interference from the other satellite, and consequently cannot obtain a high throughput in the overlapping area in limited service time. In this case, communication performance is reduced.

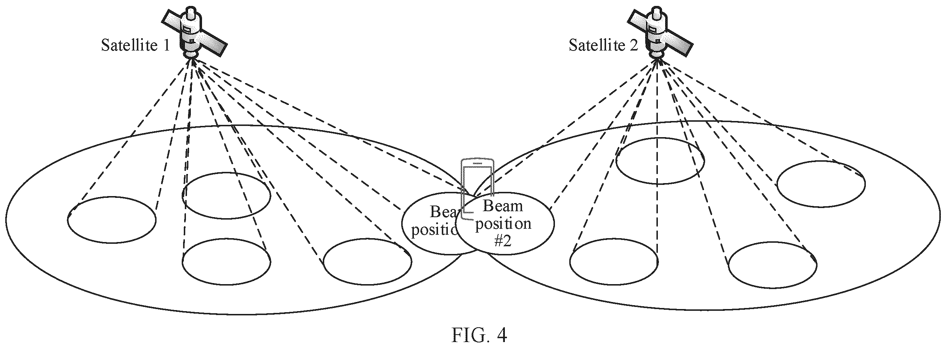

For example, as shown in FIG. 4, a satellite 1 covers, at a moment 1, a beam position #1 shown in FIG. 4, and a satellite 2 covers, at the moment 1, a beam position #2 shown in FIG. 4. There is an overlapping area between the beam position #1 and the beam position #2. Therefore, a terminal device that is of the satellite 1 and that is located in the overlapping area is interfered by a beam that is of the satellite 2 and that reaches the beam position #2. Consequently, a throughput of the terminal device is low, and communication performance is reduced. Therefore, how to avoid or reduce a problem that communication performance is reduced because a user at an edge of a coverage area of a satellite is interfered by a neighboring satellite is an urgent problem to be resolved.

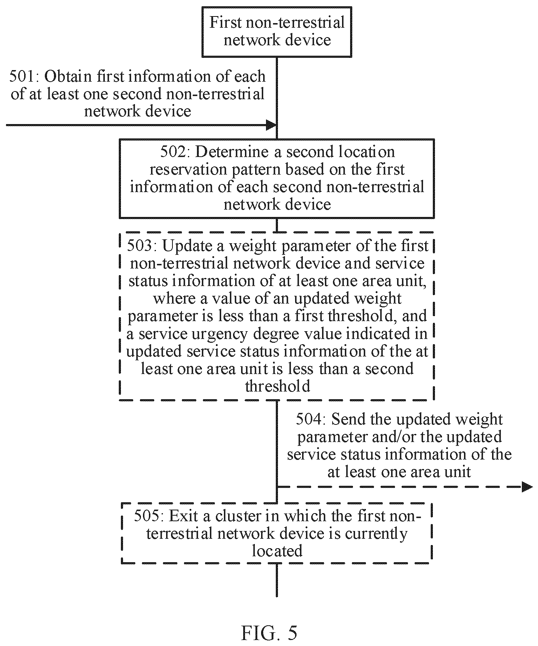

This application provides corresponding technical solutions, to avoid a case in which a first non-terrestrial network device and another non-terrestrial network device (for example, a second non-terrestrial network device) cover a same area or close areas at the same time, where the close areas may be adjacent areas or areas with a specific distance from each other, that is, avoid interference from the another non-terrestrial network device to a user located in the area. In this way, a throughput of the user in the area is improved, and communication performance is improved. For details, refer to following related descriptions of embodiments shown in FIG. 5, FIG. 6, and FIG. 9.

The following describes the technical solutions of this application with reference to the specific embodiments.

FIG. 5 is a diagram of an embodiment of a location reservation pattern determining method according to an embodiment of this application. Refer to FIG. 5. The method includes the following steps.

501: A first non-terrestrial network device obtains first information of each of at least one second non-terrestrial network device.

The first information of the second non-terrestrial network device includes one or more of the following: a first location reservation pattern, service status information of at least one area unit in an area covered by the second non-terrestrial network device, and service status information of the second non-terrestrial network device.

The following first describes the first location reservation pattern.

The first location reservation pattern is used by the second non-terrestrial network device to perform communication transmission. For example, the first location reservation pattern is used by the second non-terrestrial network device to perform communication transmission in a first time period.

The first location reservation pattern includes location information of an area unit for which the second non-terrestrial network device provides a service in the first time period. Optionally, the first location reservation pattern includes an identifier of the area unit for which the second non-terrestrial network device provides the service in the first time period.

In a possible implementation, the area unit for which the second non-terrestrial network device provides the service in the first time period includes one or more beam positions, and the location information includes an identifier of the one or more beam positions and the first time period.

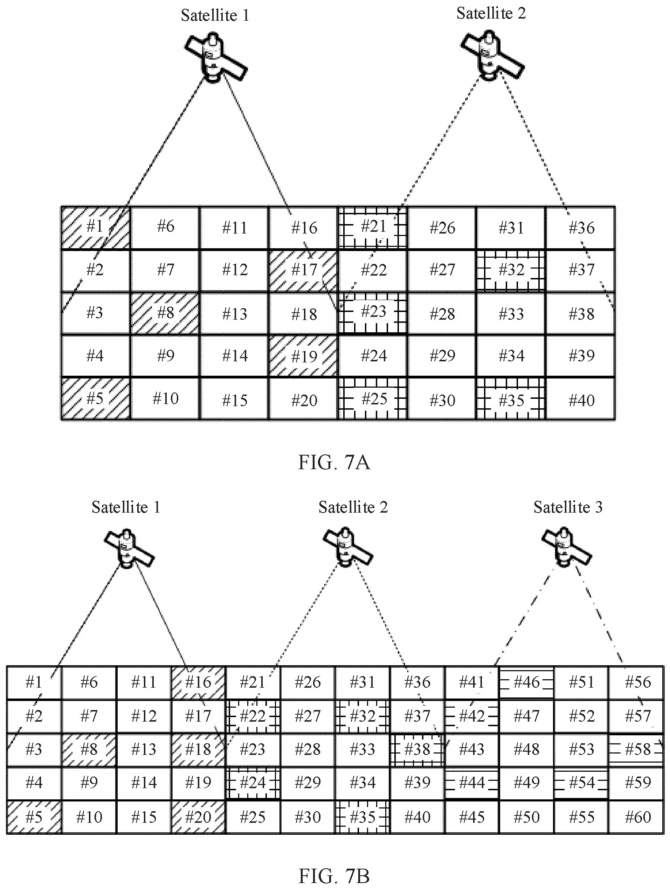

For example, as shown in FIG. 7A, the second non-terrestrial network device is a satellite 1, and the first location reservation pattern includes a first time period T and beam position identifiers respectively corresponding to a beam position #1, a beam position #5, a beam position #8, a beam position #17, and a beam position #19 for which the satellite 1 provides a service in the first time period T. Alternatively, the first location reservation pattern includes a moment Ta and beam position identifiers respectively corresponding to a beam position #1, a beam position #5, a beam position #8, a beam position #17, and a beam position #19 for which the satellite 1 provides a service in the first time period. The first time period may be a time period of preset duration that is after the moment Ta used as a start moment. Alternatively, the first time period is a time interval between the moment Ta and a moment at which the first non-terrestrial network device obtains first information of another non-terrestrial network device other than the first non-terrestrial network device again. The preset duration may be specified in a communication protocol, or may be preconfigured. This is not specifically limited in this application.

In another possible implementation, the area unit for which the second non-terrestrial network device provides the service in the first time period corresponds to one or more beams, and the location information includes an identifier of the one or more beams.

For example, as shown in FIG. 7A, the second non-terrestrial network device is a satellite 1, and beam positions for which the satellite 1 provides a service in a first time period Y include a beam position #1, a beam position #5, a beam position #8, a beam position #17, and a beam position #19. Each beam position corresponds to one beam, that is, the satellite 1 covers the beam position by sending the beam corresponding to the beam position. For example, the beam position #1 corresponds to a beam 1, the beam position #5 corresponds to a beam 5, the beam position #8 corresponds to a beam 8, the beam position #17 corresponds to a beam 17, and the beam position #19 corresponds to a beam 19. Therefore, the first location reservation pattern includes a first time period T and beam identifiers respectively corresponding to the beam 1, the beam 5, the beam 8, the beam 17, and the beam 19. Alternatively, the first location reservation pattern includes a moment Ta and beam identifiers respectively corresponding to the beam 1, the beam 5, the beam 8, the beam 17, and the beam 19. The first time period may be a time period of preset duration that is after the moment Ta used as a start moment. Alternatively, the first time period is a time interval between the moment Ta and a moment at which the first non-terrestrial network device obtains first information of another non-terrestrial network device other than the first non-terrestrial network device again. The preset duration may be specified in a communication protocol, or may be preconfigured. This is not specifically limited in this application.

Optionally, the first location reservation pattern further includes a frequency band occupied by the second non-terrestrial network in the first time period. As shown in FIG. 7A, the second non-terrestrial network device is the satellite 1, and the beam positions for which the satellite 1 provides the service in the first time period include the beam position #1, the beam position #5, the beam position #8, the beam position #17, and the beam position #19. The first location reservation pattern further includes a frequency band used by the satellite 1 to provide the service for the beam position #1, the beam position #5, the beam position #8, the beam position #17, and the beam position #19 in the first time period.

It should be noted that, optionally, if frequency bands used by different non-terrestrial networks are the same, the first location reservation pattern may alternatively not include the frequency band occupied by the second non-terrestrial network in the first time period. That is, for the non-terrestrial network, one or more frequency bands are used by default.

It should be noted that the foregoing is described by using an example in which the first location reservation pattern includes the identifier of the area unit for which the second non-terrestrial network device provides the service in the first time period. In actual application, the first location reservation pattern further includes location information of area units for which the second non-terrestrial network device provides a service in more time periods. For example, the first location reservation pattern includes location information of an area unit for which the second non-terrestrial network device provides a service in a time period T1 and location information of an area unit for which the second non-terrestrial network device provides a service in a time period T2.

The first location reservation pattern is used by the second non-terrestrial network device to perform the communication transmission in the first time period. The first location reservation pattern includes the location information of the area unit for which the second non-terrestrial network device provides the service in the first time period. To be specific, the second non-terrestrial device reserves the area unit in the first time period, and the second non-terrestrial network device may provide the service for the area unit by sending a beam to the area unit in the first time period. Actually, the second non-terrestrial network device may not provide the service for the area unit in the first time period. For example, if there is no terminal device that is in the area unit and for which a service needs to be provided in the first time period, the second non-terrestrial network device may not provide the service for the area unit in the first time period, to avoid a waste of resources. For example, if a terminal device in another area unit covered by the second non-terrestrial network device has a service requirement in the first time period, the second non-terrestrial network device may provide a service for the another area unit in the first time period, but does not provide, in the first time period, the service for the area unit reserved in the first location reservation pattern.

The following describes the service status information of the at least one area unit in the area covered by the second non-terrestrial network device.

Optionally, the at least one area unit is at least one beam position, and the service status information of the at least one area unit includes a beam position identifier and a service urgency value of each of the at least one beam position.

Specifically, the area covered by the second non-terrestrial network device may be divided into a plurality of area units. Optionally, the plurality of area units are a plurality of beam positions. As shown in FIG. 3, the second non-terrestrial network device is the satellite 1, and a coverage area of the satellite 1 includes a plurality of beam positions: a beam position #1 to a beam position #17. The service status information of the at least one area unit includes the beam position identifier and the service urgency value of each of the at least one beam position. For example, the at least one area unit includes all beam positions of the second non-terrestrial network. The service status information of the at least one area unit includes content shown in Table 1.

**Table 1**

| Beam position identifier | Service urgency value |
|---|---|
| #1 | *x*₁ |
| #2 | *x*₂ |
| #3 | *x*₃ |
| ... | ... |
| #17 | *x*₁₇ |

It should be noted that, optionally, the service urgency value of each beam position is determined based on at least one of the following: a quantity of terminal devices served by the second non-terrestrial network in the beam position, a service volume of the terminal device, and a service delay requirement of the terminal device.

It should be noted that, optionally, the service status information of the at least one area unit in the area covered by the second non-terrestrial network device includes service status information of the at least one area unit of the second non-terrestrial network device at a current moment. The first non-terrestrial network may estimate service status information of the at least one area unit of the second non-terrestrial network device in a future time period with reference to the service status information of the at least one area unit of the second non-terrestrial network device at the current moment. Alternatively, the service status information of the at least one area unit in the area covered by the second non-terrestrial network device includes service status information of the at least one area unit of the second non-terrestrial network device in a future time period. That is, the service status information of the at least one area unit may be service status information that is of the at least one area unit in the future time period and that is estimated by the second non-terrestrial network device. Optionally, the future time period overlaps a second time period, or the future time period is close to the second time period. For the second time period, refer to the following related descriptions.

Optionally, the service status information of the at least one area unit in the area covered by the second non-terrestrial network device may include a current moment or a future time period of the second non-terrestrial network device. Actually, the service status information of the at least one area unit in the area covered by the second non-terrestrial network device may alternatively not include a current moment or a future time period of the second non-terrestrial network device. That is, by default, the service status information of the at least one area unit in the area covered by the second non-terrestrial network device is service status information of the at least one area unit of the second non-terrestrial network device at the current moment or in the future time period.

The following describes the service status information of the second non-terrestrial network device.

Optionally, the service status information of the second non-terrestrial network device includes one or more of the following: a quantity of terminal devices served by the second non-terrestrial network device, a service volume of the terminal device, a service delay requirement of the terminal device, a quantity of beams provided by the second non-terrestrial network device, and a load, visible time, or a weight (weight) parameter of the second non-terrestrial network device.

The visible time is service time in which the second non-terrestrial network device provides a service in the area covered by the second non-terrestrial network device, that is, time in which a terminal device located in the area covered by the second non-terrestrial network device can provide a service via the second non-terrestrial network device.

Optionally, the weight parameter of the second non-terrestrial network device indicates service importance or a service volume of the second non-terrestrial network device. Usually, a larger value of the weight parameter of the second non-terrestrial network device indicates higher service importance or a larger service volume of the second non-terrestrial network device. A non-terrestrial network device whose weight parameter is small may determine a location reservation pattern of the non-terrestrial network device with reference to a location reservation pattern of a non-terrestrial network device whose weight parameter is large, to avoid a case in which the non-terrestrial network device whose weight parameter is small and the non-terrestrial network device whose value of the weight parameter is large cover a same area or close areas at the same time. The close areas may be adjacent areas or areas with a specific distance from each other. For example, as shown in FIG. 7B, a beam position #16 and a beam position #21 are adjacent areas. The beam position #16 and a beam position #27 are areas with a specific distance from each other. That is, interference from the non-terrestrial network device whose weight parameter is small to a user located in the area is avoided. In this way, a throughput of the user in the area is improved, and communication performance is improved.

The following describes two possible manners of determining the weight parameter of the second non-terrestrial network device.

Implementation 1: The weight parameter of the second non-terrestrial network device is determined based on at least one of the following: the quantity of terminal devices served by the second non-terrestrial network device, the service volume of the terminal device, the service delay requirement of the terminal device, the quantity of beams provided by the second non-terrestrial network device, and the load or the visible time of the second non-terrestrial network device.

Implementation 2: The weight parameter of the second non-terrestrial network device is determined based on the service status information of the at least one area unit of the second non-terrestrial network device. For example, the service status information of the at least one area unit of the second non-terrestrial network device includes the content shown in Table 1. The second non-terrestrial network device uses a sum of service urgency values of beam positions shown in Table 1 as the value of the weight parameter of the second non-terrestrial network device.

It should be noted that the service status information of the second non-terrestrial network device includes current service status information of the second non-terrestrial network device. The first non-terrestrial network device may estimate service status information of the second non-terrestrial network device in the future time period based on the current service status information of the second non-terrestrial network device. Alternatively, the service status information of the second non-terrestrial network device includes service status information of the second non-terrestrial network device in the future time period. This is not specifically limited in this application. Optionally, the future time period overlaps the second time period, or the future time period is close to the second time period. For the second time period, refer to the following related descriptions.

Optionally, the service status information of the second non-terrestrial network device may include the current moment or the future time period. Actually, the service status information of the second non-terrestrial network device may alternatively not include the current moment or the future time period. That is, by default, the service status information of the second non-terrestrial network device is the service status information of the second non-terrestrial network device at the current moment or in the future time period.

Optionally, the at least one second non-terrestrial network device may be all or a part of non-terrestrial network devices in a cluster in which the first non-terrestrial network is located. For example, as shown in FIG. 2, FIG. 2 shows satellites in the cluster in which the first non-terrestrial network device is located. The first non-terrestrial network device is a satellite 5, and the at least one second non-terrestrial network device includes the satellite 1, a satellite 2, a satellite 3, a satellite 4, and a satellite 6.

Optionally, there is an association relationship between the first non-terrestrial network device and the at least one second non-terrestrial network device.

Specifically, the at least one second non-terrestrial network device is a non-terrestrial network device that has an association relationship with the first non-terrestrial network device and that is in the cluster in which the first non-terrestrial network device is located. This helps the first non-terrestrial network device determine a proper location reservation pattern, to avoid a case in which the first non-terrestrial network device and another non-terrestrial network device (for example, the second non-terrestrial network device) in the cluster in which the first non-terrestrial network device is located cover a same area or close areas at the same time, that is, avoid interference from the another non-terrestrial network device to a user located in the area. In this way, a throughput of the user in the area is improved, and communication performance is improved.

Optionally, that there is an association relationship between the first non-terrestrial network device and the at least one second non-terrestrial network device includes: A value of a weight parameter of the first non-terrestrial network device is less than a value of a weight parameter corresponding to each of the at least one second non-terrestrial network device, and/or the at least one second non-terrestrial network device is a non-terrestrial network device adjacent to the first non-terrestrial network device.

For example, as shown in FIG. 2, a weight parameter of the satellite 1 is greater than a weight parameter of the satellite 2, and the satellite 5 is a satellite adjacent to the satellite 2. The first non-terrestrial network device is the satellite 2, and the at least one second non-terrestrial network device includes the satellite 1 and the satellite 5. That is, the satellite 2 may determine a second location reservation pattern with reference to first information respectively corresponding to the satellite 1 and the satellite 5.

It should be noted that the association relationship between the first non-terrestrial network device and the at least one second non-terrestrial network device may alternatively be represented in another manner. In other words, any non-terrestrial network device that can affect the first non-terrestrial network device to determine the second location reservation pattern of the first non-terrestrial network device may belong to the at least one second non-terrestrial network device.

For example, the first non-terrestrial network device is a satellite C. A beam position 1 of a satellite A and a beam position 2 of a satellite B are adjacent and overlap. The beam position 2 of the satellite B and a beam position 3 of the satellite C are adjacent and overlap. Therefore, if a service is provided for the beam position 2 of the satellite B in a time period A, to avoid interference, the service is not provided for the beam position 1 of the satellite A and the beam position 3 of the satellite C in the time period A. If a service is not provided for the beam position 2 of the satellite B in the time period A, and the service is provided for the beam position 1 of the satellite A in the time period A, the service may be provided for the beam position 3 of the satellite C in the time period A. In other words, the satellite C may determine a service situation of the beam position 3 of the satellite C based on a service situation of the beam position 1 of the satellite A and/or a service situation of the beam position 2 of the satellite B. Although the satellite C is not adjacent to the satellite A, the service situation of the beam position 1 of the satellite A indirectly affects the service situation of the beam position 3 of the satellite C.

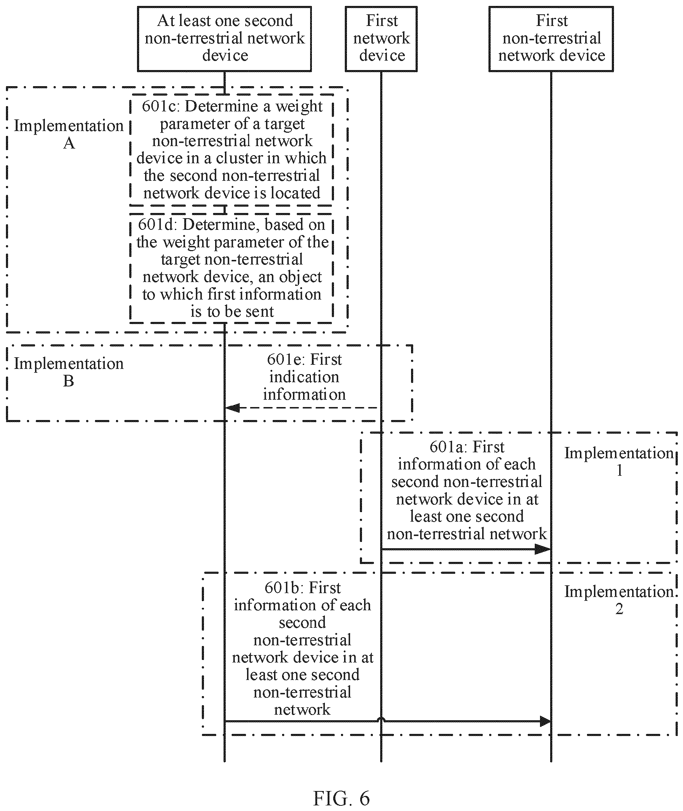

Optionally, in step 501, the first non-terrestrial network obtains the first information of each of the at least one second non-terrestrial network device in a plurality of manners. The following shows two possible obtaining manners with reference to FIG. 6.

The following describes an obtaining manner 1 with reference to step 601a in the embodiment shown in FIG. 6. Optionally, step 501 specifically includes step 601a.

601a: A first network device sends the first information of each of the at least one second non-terrestrial network device to the first non-terrestrial network device. Correspondingly, the first non-terrestrial network device receives the first information of each of the at least one second non-terrestrial network device from the first network device.

The first network device may be a core network device, an access network device, a terrestrial station, or a non-terrestrial network device. For details, refer to the foregoing related descriptions of the network device.

Optionally, if the first network device is the core network device or the terrestrial station, the core network device or the terrestrial station may send the first information of each of the at least one second non-terrestrial network device to the first non-terrestrial network device through an NG interface. For example, as shown in FIG. 1B, the first network device is an AMF or the terrestrial station, and the first non-terrestrial network device is a 5G base station. The AMF or the terrestrial station sends the first information of each of the at least one second non-terrestrial network device to the 5G base station through the NG interface.

Optionally, if the first network device is the access network device or the non-terrestrial network device, the access network device or the non-terrestrial network device may send the first information of each of the at least one second non-terrestrial network device to the first non-terrestrial network device through an Xn interface. For example, as shown in FIG. 1A, the first network device is a 5G base station, and the first non-terrestrial network device is a satellite. The 5G base station sends the first information of each of the at least one second non-terrestrial network device to the satellite through the Xn interface.

The following describes an obtaining manner 2 with reference to step 601b in the embodiment shown in FIG. 6. Optionally, step 501 specifically includes step 601b.

601b: The at least one second non-terrestrial network device sends the first information of each of the at least one second non-terrestrial network device to the first non-terrestrial network device. Correspondingly, the first non-terrestrial network device receives the first information from each of the at least one second non-terrestrial network device.

For example, as shown in FIG. 2, the first non-terrestrial network device is the satellite 5, and the at least one second non-terrestrial network device includes the satellite 1 to the satellite 4. The satellite 1 to the satellite 4 each send corresponding first information to the satellite 5.

In this implementation, optionally, the following describes two possible implementations in which the at least one second non-terrestrial network device determines an object to which the first information is to be sent. Another manner is still applicable to this application. This is not specifically limited in this application. For example, each second non-terrestrial network device in the at least one second non-terrestrial network may send the first information of the second non-terrestrial network device to another non-terrestrial network device in a cluster in which the at least one second non-terrestrial network device is located.

The following describes two possible determining manners by using an execution process of one of the at least one second non-terrestrial network device as an example.

The following describes an implementation A with reference to step 601c and step 601d. Optionally, the embodiment shown in FIG. 6 further includes step 601c and step 601d. Step 601c and step 601d may be performed before step 601b.

601c: The second non-terrestrial network device determines a weight parameter of at least one target non-terrestrial network device in the cluster in which the second non-terrestrial network device is located.

Optionally, the at least one target non-terrestrial network device includes all non-terrestrial network devices in the cluster in which the second non-terrestrial network device is located; or the at least one target non-terrestrial network device includes a non-terrestrial network device adjacent to the second non-terrestrial network device.

For example, as shown in FIG. 2, the second non-terrestrial network device is the satellite 2, and the at least one target non-terrestrial network device is the satellite 1 and the satellite 3 to a satellite K. The satellite 2 may determine a weight parameter of each of the satellite 3 to the satellite K.

For example, as shown in FIG. 2, the second non-terrestrial network device is the satellite 2, and the at least one target non-terrestrial network device includes the satellite 1 and the satellite 5, that is, satellites adjacent to the satellite 2. The satellite 2 may determine a weight parameter of each of the satellite 1 and the satellite 5.

The following describes two possible implementations in which the second non-terrestrial network device determines the weight parameter of the at least one target non-terrestrial network device. Another implementation is still applicable to this application. The following examples do not constitute a limitation on this application.

Implementation 1: The second non-terrestrial network device receives the weight parameter from the at least one target non-terrestrial network device.

In this implementation, the at least one target non-terrestrial network device may send the weight parameter of the at least one target non-terrestrial network device to the second non-terrestrial network device. This helps the second non-terrestrial network device determine the object to which the first information is to be sent.

Implementation 2: The second non-terrestrial network device receives service status information from at least one area unit in an area covered by each of the at least one target non-terrestrial network device. The second non-terrestrial network device determines the weight parameter of the target non-terrestrial network device based on the service status information of the at least one area unit in the area covered by each of the at least one target non-terrestrial network device.

For example, service status information of at least one area unit in an area covered by a target non-terrestrial network device includes beam position identifiers and service urgency values of a plurality of beam positions of the target non-terrestrial network device. The second non-terrestrial network device uses a sum of the service urgency values of the plurality of beam positions as a weight parameter of the target non-terrestrial network device.

601d: The second non-terrestrial network device determines, based on the weight parameter of the at least one target non-terrestrial network device, the object to which the first information is to be sent.

The object to which the first information is to be sent includes the first non-terrestrial network device.

Optionally, the object to which the first information is to be sent includes a target non-terrestrial network device that is in the at least one target non-terrestrial network device and that includes a weight parameter whose value is less than the value of the weight parameter of the second non-terrestrial network device. In other words, the second non-terrestrial network device may send the first information to the target non-terrestrial network device whose value of the weight parameter is less than the value of the weight parameter of the second non-terrestrial network device, to avoid a case in which the target non-terrestrial network device and the second non-terrestrial network device cover a same area or close areas at the same time, that is, avoid interference to a user located in the area. In this way, a throughput of the user in the area is improved, and communication performance is improved.

For example, as shown in FIG. 2, the second non-terrestrial network device is the satellite 2, and a value of the weight parameter of the satellite 2 is greater than values of weight parameters respectively corresponding to the satellite 3 to the satellite K. Therefore, the satellite 2 may separately send first information of the satellite 2 to the satellite 3 to the satellite K.

It can be learned that in this implementation, the second non-terrestrial network device may determine, based on a value of a weight parameter of a non-terrestrial network device in the cluster in which the second non-terrestrial network device is located, an object to which the second non-terrestrial network device transfers the first information. This helps the first non-terrestrial network device obtain the first information of each of the at least one second non-terrestrial network device. In this way, the non-terrestrial network device whose weight parameter is small may determine the location reservation pattern of the non-terrestrial network device with reference to the location reservation pattern of the non-terrestrial network device whose weight parameter is large, to avoid the case in which the non-terrestrial network device whose weight parameter is small and the non-terrestrial network device whose value of the weight parameter is large cover the same area or the close areas at the same time. That is, the interference from the non-terrestrial network device whose weight parameter is small to the user located in the area is avoided. In this way, the throughput of the user in the area is improved, and the communication performance is improved.

The following describes an implementation B with reference to step 601e. Optionally, the embodiment shown in FIG. 6 further includes step 601e. Step 601e may be performed before step 601b.

601e: The first network device sends first indication information to the second non-terrestrial network device. Correspondingly, the second non-terrestrial network device receives the first indication information from the first network device.

The first indication information indicates the object to which the first information is to be sent. The object to which the first information is to be sent includes the first non-terrestrial network device.

In a possible implementation, the first indication information directly indicates the object to which the first information of the second non-terrestrial network device is to be sent.

In another possible implementation, the first indication information includes a transfer sequence. The transfer sequence indicates an object to which each non-terrestrial network device in the cluster in which the first non-terrestrial network device is located transfers first information corresponding to the non-terrestrial network device. For example, as shown in FIG. 2, the cluster in which the first non-terrestrial network device is located includes K satellites, and the transfer sequence is satellite 1→satellite 2-satellite 3→...→satellite K. If the second non-terrestrial network device is the satellite 2, the satellite 2 sends the first information of the second non-terrestrial network device to the satellite 3. Optionally, a weight parameter of an i^{th} satellite in the transfer sequence is greater than a weight parameter of an (i+1)^{th} satellite. For example, the transfer sequence is satellite 1→satellite 2-satellite 3→...→satellite K. As shown in FIG. 2, a value of a weight parameter W₁ of the satellite 1 is greater than a value of a weight parameter W₂ of the satellite 2. The value of the weight parameter W₂ of the satellite 2 is greater than a value of a weight parameter W₃ of the satellite 3. By analogy, a value of a weight parameter W_{K-1} of a satellite K-1 is greater than a value of a weight parameter W_{K} of the satellite K.

502: The first non-terrestrial network device determines the second location reservation pattern based on the first information of each second non-terrestrial network device.

The second location reservation pattern is used by the first non-terrestrial network device to perform communication transmission.

Optionally, the second location reservation pattern is used by the first non-terrestrial network device to perform communication transmission in the first time period. The first time period overlaps the second time period. The second location reservation pattern is similar to the first location reservation pattern. For details, refer to the foregoing related descriptions of the first location reservation pattern.

For example, as shown in FIG. 7A, the first non-terrestrial network device is the satellite 2, and the second non-terrestrial network device is the satellite 1. After the satellite 2 receives a first location reservation pattern of the satellite 1, when determining a second location reservation pattern of the satellite 2, the satellite 2 should avoid simultaneously serving a beam position close to a beam position served by the satellite 1, to reduce or avoid interference. As shown in FIG. 7A, the satellite 1 provides a service for the beam position #1, the beam position #5, the beam position #8, the beam position #17, and the beam position #19 in a time period 1. To avoid interference to terminal devices located at the beam position #17 and the beam position #19, the satellite 2 may choose to avoid serving a beam position #22 and a beam position #24, but choose to serve the beam position #21, a beam position #23, and a beam position #25. That is, the second location reservation pattern includes a time period 2 and beam position identifiers respectively corresponding to the beam position #21, the beam position #23, the beam position #25, a beam position #32, and a beam position #35. The time period 1 overlaps the time period 2.

For example, as shown in FIG. 7B, the first non-terrestrial network device is the satellite 2, and the at least one second non-terrestrial network device includes the satellite 1 and the satellite 3. The satellite 2 receives a first location reservation pattern of the satellite 1 and a service urgency value of each beam position in a coverage area of the satellite 3. When determining a second location reservation pattern, the satellite 2 should avoid simultaneously serving a beam position close to a beam position served by the satellite 1, to reduce or avoid interference. As shown in FIG. 7A, the satellite 1 provides a service for the beam position #5, the beam position #8, the beam position #16, a beam position #18, and a beam position #20 in a time period 1. To avoid interference to terminal devices located at the beam position #16, the beam position #18, and the beam position #20, the satellite 2 may avoid serving the beam position #21, a beam position #23, and a beam position #25, but choose to serve a beam position #22 and a beam position #24. If a service urgency value of a beam position #37 is less than a service urgency value of a beam position #42, a service urgency value of a beam position #38 is greater than a service urgency value of a beam position #43, and a service urgency value of a beam position #39 is less than a service urgency value of a beam position #44, the satellite 2 may choose to serve the beam position #38. Therefore, that is, the second location reservation pattern includes a time period 2 and beam position identifiers respectively corresponding to the beam position #22, the beam position #24, a beam position #32, a beam position #35, and the beam position #38. The time period 1 overlaps the time period 2.

It can be learned that the first non-terrestrial network device determines the first location reservation pattern with reference to the service urgency value of the at least one beam position of the at least one second non-terrestrial network device. In a scenario in which a service requirement of a terrestrial terminal device in the area covered by the at least one second non-terrestrial network device is time-varying and uneven, this helps the first non-terrestrial network device adjust the second location reservation pattern, to avoid interference from the first non-terrestrial network device to a user in an overlapping coverage area of the first non-terrestrial network device and the at least one second non-terrestrial network device. The solutions of this application are more applicable to a satellite communication scenario. The first non-terrestrial network can determine a proper second location reservation pattern with reference to the time-varying and uneven service requirement of the terminal device in the area covered by the non-terrestrial network device. In this way, the communication performance is improved.

For example, if visible time of the at least one second non-terrestrial network device is short, when the first non-terrestrial network device determines the second location reservation pattern, the first non-terrestrial network device may avoid, as much as possible, simultaneously serving a beam position adjacent to the at least one non-terrestrial network device, to reduce or avoid interference. In this way, the at least one second non-terrestrial network device provides, in the short visible time, a service for the area covered by the at least one second non-terrestrial network device.

Optionally, step 502 specifically includes: When the first non-terrestrial network device joins the cluster in which the at least one second non-terrestrial network device is located, the first non-terrestrial network device determines the second location reservation pattern based on the first information of each second non-terrestrial network device. Optionally, the first non-terrestrial network device updates the weight parameter of the first non-terrestrial network device and/or service status information of at least one area unit.

In this implementation, after the first non-terrestrial network device determines the second location reservation pattern, the first non-terrestrial network device may send the second location reservation pattern. For example, the first non-terrestrial network device may broadcast the second location reservation pattern. The first non-terrestrial network device sends the weight parameter and/or the service status information of the at least one area unit.

Optionally, the embodiment shown in FIG. 5 further includes step 503 to step 505. Step 503 to step 505 may be performed after step 502.

503: The first non-terrestrial network device updates the weight parameter of the first non-terrestrial network device and the service status information of the at least one area unit. A value of an updated weight parameter is less than a first threshold, and a service urgency value indicated in updated service status information of the at least one area unit is less than a second threshold.

For example, the first threshold is 0 or -1. The second threshold is 0 or 0.5.

Specifically, the first non-terrestrial network device is exiting, is ready to exit, or has exited the cluster in which the first non-terrestrial network device is currently located. The first non-terrestrial network device updates the weight parameter of the first non-terrestrial network device to 0, and/or the first non-terrestrial network device updates a service urgency value of each of at least one beam position of the first non-terrestrial network device to 0.

504: The first non-terrestrial network device sends the updated weight parameter and/or the updated service status information of the at least one area unit.

For example, the first non-terrestrial network device is exiting, is ready to exit, or has exited the cluster in which the first non-terrestrial network device is currently located. The first non-terrestrial network device may send the updated weight parameter and/or the updated service status information of the at least one area unit to a non-terrestrial network device that has an association relationship with the first non-terrestrial network device. For example, the first non-terrestrial network device sends the updated weight parameter and/or the updated service status information of the at least one area unit to a non-terrestrial network adjacent to the first non-terrestrial network device.

505: The first non-terrestrial network device exits the cluster in which the first non-terrestrial network device is currently located.

It should be noted that there is no fixed execution sequence between step 505 and step 503 and step 504. Step 503 and step 504 may be first performed, and then step 505 is performed; step 505 is first performed, and then step 503 and step 504 are performed; or step 505 and step 503 and step 504 are simultaneously performed based on a case. This is not specifically limited in this application.

In this embodiment of this application, the first non-terrestrial network device obtains the first information of each of the at least one second non-terrestrial network device. The first information of the second non-terrestrial network device includes one or more of the following: the first location reservation pattern, the service status information of the at least one area unit in the area covered by the second non-terrestrial network device, and the service status information of the second non-terrestrial network device. The first location reservation pattern is used by the second non-terrestrial network device to perform the communication transmission. The first non-terrestrial network device determines the second location reservation pattern based on the first information of each second non-terrestrial network device. The second location reservation pattern is used by the first non-terrestrial network device to perform the communication transmission. It can be learned that the first non-terrestrial network device may determine the second location reservation pattern with reference to the first information of each second non-terrestrial network device. This helps the first non-terrestrial network device determine the proper location reservation pattern, to avoid the case in which the first non-terrestrial network device and the another non-terrestrial network device (for example, the second non-terrestrial network device) cover the same area or the close areas at the same time, so as to avoid or reduce the interference from the another non-terrestrial network device to the user located in the area. In this way, the throughput of the user in the area is improved, and the communication performance is improved.

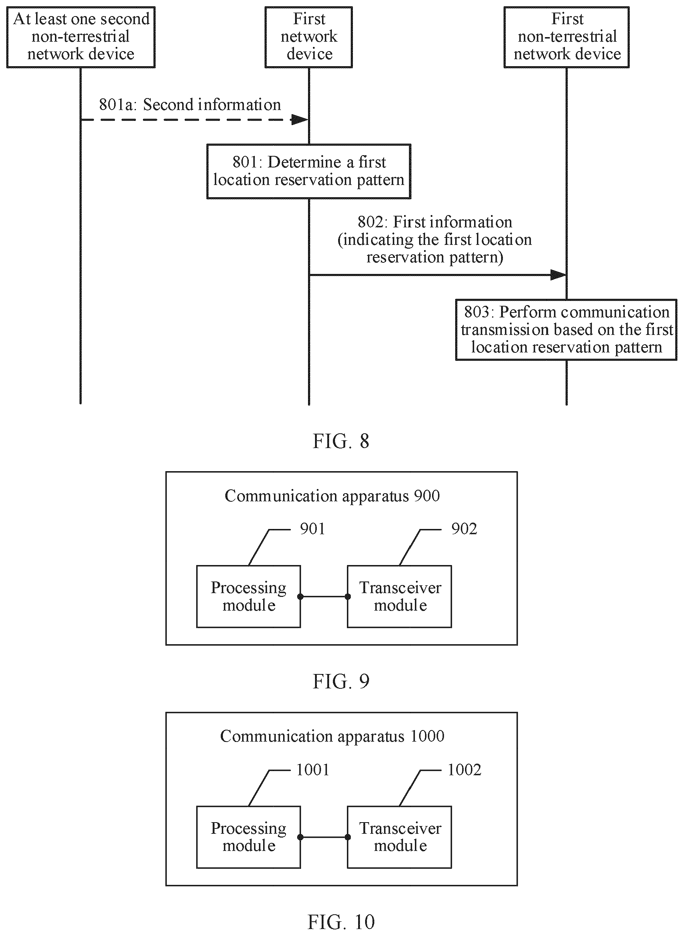

FIG. 8 is a diagram of an embodiment of a location reservation pattern sending method and a location reservation pattern receiving method according to an embodiment of this application. Refer to FIG. 8. The method includes the following steps.

801: A first network device determines a first location reservation pattern.

The first location reservation pattern includes location information of an area unit for which a first non-terrestrial network device provides a service in a first time period. Optionally, the first location reservation pattern includes an identifier of the area unit for which the first non-terrestrial network device provides the service in the first time period.

In a possible implementation, the area unit for which the first non-terrestrial network device provides the service in the first time period is one or more beam positions, and the location information includes an identifier of the one or more beam positions and the first time period.

For example, as shown in FIG. 7A, the first non-terrestrial network device is a satellite 2, and the first location reservation pattern includes a first time period T and beam position identifiers respectively corresponding to a beam position #21, a beam position #23, a beam position #25, a beam position #32, and a beam position #35 for which the satellite 2 provides a service in the first time period T. Alternatively, the first location reservation pattern includes a moment Ta and beam position identifiers respectively corresponding to a beam position #21, a beam position #23, a beam position #25, a beam position #32, and a beam position #35 for which the satellite 2 provides a service in the first time period. The first time period T may be a time period of preset duration that is after the moment Ta used as a start moment. Alternatively, the first time period T is a time interval between the moment Ta and a moment at which the first network device obtains first information of another non-terrestrial network device other than the first non-terrestrial network device again. The preset duration may be specified in a communication protocol, or may be preconfigured. This is not specifically limited in this application.

In another possible implementation, the area unit for which the first non-terrestrial network device provides the service in the first time period corresponds to one or more beams, and the location information includes an identifier of the one or more beams.

For example, as shown in FIG. 7A, the first non-terrestrial network device is a satellite 2, and the satellite 2 provides a service for a beam position #21, a beam position #23, a beam position #25, a beam position #32, and a beam position #35 in a first time period T. Each beam position corresponds to one beam, that is, the satellite 2 covers the beam position by sending the beam corresponding to the beam position. For example, the beam position #21 corresponds to a beam 21, the beam position #23 corresponds to a beam 23, the beam position #25 corresponds to a beam 25, the beam position #32 corresponds to a beam 32, and the beam position #35 corresponds to a beam 35. Therefore, the first location reservation pattern includes the first time period T and beam identifiers respectively corresponding to the beam 21, the beam 23, the beam 25, the beam 32, and the beam 35. The first time period may be a time period of preset duration that is after a moment Ta used as a start moment. Alternatively, the first time period T is a time interval between a moment Ta and a moment at which the first network device obtains first information of another non-terrestrial network device other than the first non-terrestrial network device again. The preset duration may be specified in a communication protocol, or may be preconfigured. This is not specifically limited in this application.

Optionally, the first location reservation pattern further includes a frequency band occupied by the first non-terrestrial network device in the first time period. As shown in FIG. 7A, the first non-terrestrial network device is the satellite 2, and beam positions for which the satellite 2 provides the service in the first time period include the beam position #21, the beam position #23, the beam position #25, the beam position #32, and the beam position #35. The first location reservation pattern further includes a frequency band used by the satellite 2 to provide the service for the beam position #21, the beam position #23, the beam position #25, the beam position #32, and the beam position #35 in the first time period.

It should be noted that, optionally, if frequency bands used by different satellites are the same, the first location reservation pattern may alternatively not include the frequency band occupied by the first non-terrestrial network device in the first time period. That is, for a non-terrestrial network, one or more frequency bands are used by the satellite by default.

It should be noted that the foregoing is described by using an example in which the first location reservation pattern includes the identifier of the area unit for which the first non-terrestrial network device provides the service in the first time period. In actual application, the first location reservation pattern further includes location information of area units for which the first non-terrestrial network device provides a service in more time periods. For example, the first location reservation pattern includes location information of an area unit for which the first non-terrestrial network device provides a service in a time period T1 and location information of an area unit for which the first non-terrestrial network device provides a service in a time period T2.

The first location reservation pattern is used by the first non-terrestrial network device to perform communication transmission. Specifically, the first location reservation pattern is used by the first non-terrestrial network device to perform communication transmission in the first time period.

For a form of the first network device, refer to the foregoing related descriptions of the network device.

Optionally, step 801 specifically includes: The first network device determines the first location reservation pattern based on second information of each of at least one second non-terrestrial network device.

The second information of each second non-terrestrial network device includes one or more of the following: a second location reservation pattern, service status information of at least one area unit in an area covered by the second non-terrestrial network device, and service status information of the second non-terrestrial network device. The second location reservation pattern is used by the second non-terrestrial network device to perform communication transmission.

Optionally, the second location reservation pattern is used by the second non-terrestrial network device to perform communication transmission in a second time period. The first time period overlaps the second time period.

It should be noted that a process in which the first network device determines the first location reservation pattern is similar to step 502 in the embodiment shown in FIG. 5. For details, refer to related descriptions of step 502 in the embodiment shown in FIG. 5.

The second location reservation pattern is similar to the first location reservation pattern in step 501 in the embodiment shown in FIG. 5. For details, refer to related descriptions of the first location reservation pattern in step 501 in the embodiment shown in FIG. 5.

The service status information of the at least one area unit in the area covered by the second non-terrestrial network device is similar to the service status information of the at least one area unit in the area covered by the second non-terrestrial network device in step 501 in the embodiment shown in FIG. 5. For details, refer to related descriptions of the service status information of the at least one area unit in the area covered by the second non-terrestrial network device in step 501 in the embodiment shown in FIG. 5.

The service status information of the second non-terrestrial network device is similar to the service status information of the second non-terrestrial network device in step 501 in the embodiment shown in FIG. 5. For details, refer to related descriptions of the service status information of the second non-terrestrial network device in step 501 in the embodiment shown in FIG. 5.

Optionally, the at least one second non-terrestrial network device may be all or a part of non-terrestrial network devices in a cluster in which the first non-terrestrial network is located. For example, as shown in FIG. 2, FIG. 2 shows satellites in the cluster in which the first non-terrestrial network device is located. The first non-terrestrial network device is a satellite 5, and the at least one second non-terrestrial network device includes a satellite 1, the satellite 2, a satellite 3, a satellite 4, and a satellite 6.

Optionally, there is an association relationship between the first non-terrestrial network device and the at least one second non-terrestrial network device. For the association relationship between the first non-terrestrial network device and the at least one second non-terrestrial network device, refer to related descriptions of step 501 in the embodiment shown in FIG. 5.

Optionally, the embodiment shown in FIG. 8 further includes step 801a. Step 801a may be performed before step 801.

801a: The at least one second non-terrestrial network device sends the second information to the first network device. Correspondingly, the first network device receives the second information from the at least one second non-terrestrial network device.

Optionally, the first network device is a core network device or a terrestrial station, and the core network device or the terrestrial station receives, through an NG interface, the second information separately sent by the at least one second non-terrestrial network device. For example, as shown in FIG. 1B, the first network device is an AMF or a terrestrial station, and the at least one second non-terrestrial network device is at least one 5G base station. The AMF or the terrestrial station receives, through the NG interface, corresponding second information separately sent by the at least one 5G base station.

Optionally, the first network device is an access network device or a non-terrestrial network device, and the access network device or the non-terrestrial network device receives, through an Xn interface, the second information separately sent by the at least one second non-terrestrial network device. For example, as shown in FIG. 1A, the first network device is a 5G base station, and the at least one second non-terrestrial network device is at least one satellite. The 5G base station receives, through the Xn interface, second information sent by the at least one satellite.

802: The first network device sends the first information to the first non-terrestrial network device. The first information indicates the first location reservation pattern. Correspondingly, the first non-terrestrial network device receives the first information from the first network device.

The first location reservation pattern is used by the first non-terrestrial network device to perform the communication transmission.

Specifically, the first location reservation pattern includes the location information of the area unit for which the first non-terrestrial network device provides the service in the first time period. The first network device indicates the first location reservation pattern to the first non-terrestrial network device. In this case, it may be understood that the first non-terrestrial network device reserves the area unit in the first time period, and the first non-terrestrial network device may provide the service for the area unit by sending a beam to the area unit in the first time period. Actually, the first non-terrestrial network device may not provide the service for the area unit in the first time period. For example, if there is no terminal device that is in the area unit and for which a service needs to be provided in the first time period, the first non-terrestrial network device may not provide the service for the area unit in the first time period. For example, if a terminal device in another area unit covered by the first non-terrestrial network device has a service requirement in the first time period, the first non-terrestrial network device may provide a service for the another area unit in the first time period, but does not provide, in the first time period, the service for the area unit reserved in the first location reservation pattern. In this way, a waste of resources is avoided.

Optionally, the first network device is a core network device or a terrestrial station, and the core network device or the terrestrial station sends the first information to the first non-terrestrial network device through an NG interface.

For example, as shown in FIG. 1A, the first network device is an AMF or a terrestrial station, and the first non-terrestrial network device is a satellite. The AMF or the terrestrial station sends the first information to the satellite through the NG interface.

For example, as shown in FIG. 1B, the first network device is an AMF or a terrestrial station, the first non-terrestrial network device is a 5G base station, and the AMF or the terrestrial station sends the first information to the 5G base station through the NG interface.

Optionally, the first network device is an access network device or a non-terrestrial network device, and the first non-terrestrial network device is a satellite. The access network device or the non-terrestrial network device sends the first information to the satellite through an Xn interface. For example, as shown in FIG. 1A, the first network device is a 5G base station, and the 5G base station sends the first information to the satellite through the Xn interface.

803: The first non-terrestrial network device performs the communication transmission based on the first location reservation pattern.

For example, as shown in FIG. 7B, the first non-terrestrial network device is a satellite 2, and the first location reservation pattern includes a time period 2 and beam position identifiers respectively corresponding to a beam position #22, a beam position #24, a beam position #32, a beam position #35, and a beam position #38. The satellite 2 may provide, in the time period 2, a service for terminal devices located at the beam position #22, the beam position #24, the beam position #32, the beam position #35, and the beam position #38.

In this embodiment of this application, the first network device determines the first location reservation pattern, where the first location reservation pattern is used by the first non-terrestrial network device to perform the communication transmission. The first network device sends the first information to the first non-terrestrial network device. The first information indicates the first location reservation pattern. It can be learned that the first network device may determine the first location reservation pattern for the first non-terrestrial network device, and indicate the first location reservation pattern to the first non-terrestrial network device. In other words, the first network device determines the location reservation pattern for the first non-terrestrial network device. This helps avoid a case in which the first non-terrestrial network device and another non-terrestrial network device cover a same area or close areas at the same time. The close areas may be adjacent areas or areas with a specific distance from each other. For example, as shown in FIG. 7B, a beam position #16 and a beam position #21 are adjacent areas. The beam position #16 and a beam position #27 are areas with a specific distance from each other. This avoids or reduces interference from the another non-terrestrial network device to a user located in the area. In this way, a throughput of the user in the area is improved, and communication performance is improved.

The following describes a communication apparatus provided in an embodiment of this application. FIG. 9 is a diagram of a first structure of a communication apparatus according to an embodiment of this application. The communication apparatus may be configured to perform the steps performed by the first non-terrestrial network device in the embodiments shown in FIG. 5, FIG. 6, and FIG. 8. For details, refer to related descriptions in the foregoing method embodiments.

The communication apparatus 900 includes a processing module 901 and a transceiver module 902.

Optionally, the communication apparatus 900 is configured to perform some or all of the steps performed by the first non-terrestrial network device in the embodiments shown in FIG. 5 and FIG. 6. For example, the communication apparatus 900 performs the following solution:

The transceiver module 902 is configured to obtain first information of each of at least one second non-terrestrial network device, where the first information of the second non-terrestrial network device includes one or more of the following: a first location reservation pattern, service status information of at least one area unit in an area covered by the second non-terrestrial network device, and service status information of the second non-terrestrial network device, and the first location reservation pattern is used by the second non-terrestrial network device to perform communication transmission.

The processing module 901 is configured to determine a second location reservation pattern based on the first information of each second non-terrestrial network device, where the second location reservation pattern is used by the communication apparatus 900 to perform communication transmission.

In a possible implementation, the first location reservation pattern is used by the communication apparatus 900 to perform communication transmission in a first time period, the second location reservation pattern is used by the second non-terrestrial network device to perform communication transmission in second time, and the first time period overlaps the second time period.

In another possible implementation, there is an association relationship between the communication apparatus 900 and the at least one second non-terrestrial network device.

In another possible implementation, that there is an association relationship between the communication apparatus 900 and the at least one second non-terrestrial network device includes: A value of a weight parameter of the communication apparatus 900 is less than a value of a weight parameter corresponding to each of the at least one second non-terrestrial network device, and/or the at least one second non-terrestrial network device is a non-terrestrial network device adjacent to the communication apparatus 900.

In another possible implementation, the weight parameter of the communication apparatus 900 is determined based on service status information of the communication apparatus 900, or is determined based on service status information of at least one area unit in an area covered by the communication apparatus 900.

In another possible implementation, the first location reservation pattern includes location information of an area unit for which the second non-terrestrial network device provides a service in the first time period.

In another possible implementation, the location information includes an identifier of the area unit for which the second non-terrestrial network device provides the service in the first time period. In this way, overheads of indicating the area unit by the second non-terrestrial network device are reduced.

In another possible implementation, the first location reservation pattern further includes a frequency band occupied by the second non-terrestrial network device in the first time period.

In another possible implementation, the area unit for which the second non-terrestrial network device provides the service in the first time period includes one or more beam positions, and the location information includes an identifier of the one or more beam positions; or the area unit for which the second non-terrestrial network device provides the service in the first time period corresponds to one or more beams, and the location information includes an identifier of the one or more beams.

In another possible implementation, the at least one area unit is at least one beam position, and the service status information of the at least one area unit includes a beam position identifier and a service urgency value of each of the at least one beam position.

In another possible implementation, the service status information of the second non-terrestrial network device includes one or more of the following: a quantity of terminal devices served by the second non-terrestrial network device, a service volume of the terminal device, a service delay requirement of the terminal device, a quantity of beams provided by the second non-terrestrial network device, and a load, visible time, or the weight parameter of the second non-terrestrial network device.

In another possible implementation, the transceiver module 902 is specifically configured to:
receive the first information from each of the at least one second non-terrestrial network device; or
receive the first information of each of the at least one second non-terrestrial network device from a first network device.

In another possible implementation, the processing module 901 is specifically configured to:
when the communication apparatus 900 joins a cluster in which the at least one second non-terrestrial network device is located, determine the second location reservation pattern based on the first information of each second non-terrestrial network device.

In another possible implementation, the processing module 901 is further configured to update the weight parameter of the communication apparatus 900 and/or the service status information of the at least one area unit.

In another possible implementation, the processing module 901 is further configured to:
update the weight parameter of the communication apparatus 900 and/or the service status information of the at least one area unit, where a value of an updated weight parameter is less than a first threshold, and a service urgency value indicated in updated service status information of the at least one area unit is less than a second threshold.

The transceiver module 902 is further configured to send the updated weight parameter and/or the updated service status information of the at least one area unit.

The processing module 901 is further configured to exit a cluster in which the first non-terrestrial network device is currently located.

Optionally, the communication apparatus 900 is configured to perform some or all of the steps performed by the first non-terrestrial network device in the embodiment shown in FIG. 8. For example, the communication apparatus 900 performs the following solution:

The transceiver module 902 is configured to receive first information from a first network device, where the first information indicates a first location reservation pattern.

The processing module 901 is configured to perform communication transmission based on the first location reservation pattern.

In a possible implementation, the first location reservation pattern includes location information of an area unit for which the communication apparatus 900 provides a service in a first time period.

In another possible implementation, the location information includes an identifier of the area unit for which the communication apparatus 900 provides the service in the first time period.

In another possible implementation, the first location reservation pattern further includes a frequency band occupied by the communication apparatus 900 in the first time period.

In another possible implementation, the area unit for which the communication apparatus 900 provides the service in the first time period includes one or more beam positions, and the location information includes an identifier of the one or more beam positions; or the area unit for which the communication apparatus 900 provides the service in the first time period corresponds to one or more beams, and the location information includes an identifier of the one or more beams.

In another possible implementation, at least one area unit is at least one beam position, and service status information of the at least one area unit includes a beam position identifier and a service urgency value of each of the at least one beam position.

In another possible implementation, service status information of a second non-terrestrial network device includes one or more of the following: a quantity of terminal devices currently served by the second non-terrestrial network device, a service volume of the terminal device, a service delay requirement of the terminal device, a quantity of beams provided by the second non-terrestrial network device, and a load, visible time, or a weight parameter of the second non-terrestrial network device.

In another possible implementation, there is an association relationship between the communication apparatus 900 and at least one second non-terrestrial network device.

In another possible implementation, that there is an association relationship between the communication apparatus 900 and at least one second non-terrestrial network device includes: A value of a weight parameter of the communication apparatus 900 is less than a value of a weight parameter corresponding to each of the at least one second non-terrestrial network device, and/or the at least one second non-terrestrial network device is a non-terrestrial network device adjacent to the communication apparatus 900.

The following describes a communication apparatus provided in an embodiment of this application. FIG. 10 is a diagram of a second structure of a communication apparatus according to an embodiment of this application. The communication apparatus may be configured to perform the steps performed by the second non-terrestrial network device in the embodiments shown in FIG. 6 and FIG. 8. For details, refer to related descriptions in the foregoing method embodiments.

The communication apparatus 1000 includes a processing module 1001 and a transceiver module 1002.

The processing module 1001 is configured to determine first information of the communication apparatus 1000, where the first information includes one or more of the following: a first location reservation pattern, service status information of at least one area unit in an area covered by the communication apparatus 1000, and service status information of the communication apparatus 1000, and the first location reservation pattern is used by the communication apparatus 1000 to perform communication transmission.

The transceiver module 1002 is configured to send the first information to a first non-terrestrial network device.

In a possible implementation, the processing module 1001 is further configured to:
determine a weight parameter of at least one target non-terrestrial network device in a cluster in which the communication apparatus 1000 is located; and
determine, based on the weight parameter of the at least one target non-terrestrial network device, an object to which the first information is to be sent, where the object to which the first information is to be sent includes the first non-terrestrial network device.

In another possible implementation, the at least one target non-terrestrial network device includes all non-terrestrial network devices in the cluster in which the communication apparatus 1000 is located; or the at least one target non-terrestrial network device includes a non-terrestrial network device adjacent to the communication apparatus 1000.

In another possible implementation, the processing module 1001 is specifically configured to:
receive the weight parameter from the at least one target non-terrestrial network device.

In another possible implementation, the processing module 1001 is specifically configured to:
receive service status information from at least one area unit in an area covered by each of the at least one target non-terrestrial network device; and
determine the weight parameter of the target non-terrestrial network device based on the service status information of the at least one area unit in the area covered by each target non-terrestrial network device.

In another possible implementation, the transceiver module 1002 is further configured to:
receive first indication information from a first network device, where the first indication information indicates an object to which the first information is to be sent, and the object to which the first information is to be sent includes the first non-terrestrial network device.

In another possible implementation, the object to which the first information is to be sent includes a non-terrestrial network device that is in the cluster in which the communication apparatus 1000 is located and that includes a weight parameter whose value is less than a value of a weight parameter of the communication apparatus 1000.

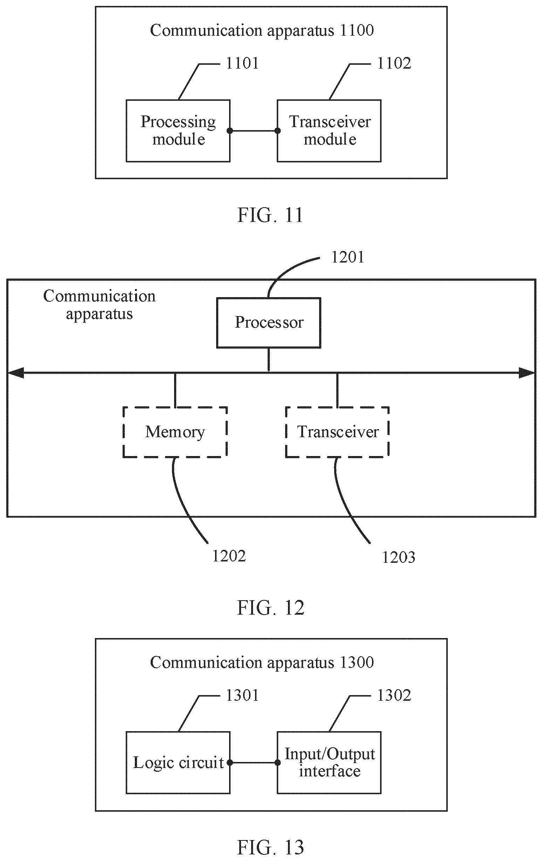

The following describes a communication apparatus provided in an embodiment of this application. FIG. 11 is a diagram of a third structure of a communication apparatus according to an embodiment of this application. The communication apparatus may be configured to perform the steps performed by the first network device in the embodiments shown in FIG. 6 and FIG. 8. For details, refer to related descriptions in the foregoing method embodiments.

The communication apparatus 1100 includes a processing module 1101 and a transceiver module 1102.

The processing module 1101 is configured to determine a first location reservation pattern, where the first location reservation pattern is used by a first non-terrestrial network device to perform communication transmission.

The transceiver module 1102 is configured to send first information to the first non-terrestrial network device, where the first information indicates the first location reservation pattern.

In another possible implementation, the first location reservation pattern includes location information of an area unit for which the first non-terrestrial network device provides a service in a first time period.

In another possible implementation, the location information includes an identifier of the area unit for which the first non-terrestrial network device provides the service in the first time period.

In another possible implementation, the first location reservation pattern further includes a frequency band occupied by the first non-terrestrial network device in the first time period.

In another possible implementation, the area unit for which the first non-terrestrial network device provides the service in the first time period includes one or more beam positions, and the location information includes an identifier of the one or more beam positions; or the area unit for which the first non-terrestrial network device provides the service in the first time period corresponds to one or more beams, and the location information includes an identifier of the one or more beams.

In another possible implementation, the processing module 1101 is specifically configured to:
determine the first location reservation pattern based on second information of each of at least one second non-terrestrial network device, where the second information of the second non-terrestrial network device includes one or more of the following: a second location reservation pattern, service status information of at least one area unit in an area covered by the second non-terrestrial network device, and service status information of the second non-terrestrial network device, and the second location reservation pattern is used by the second non-terrestrial network device to perform communication transmission.

In another possible implementation, the first location reservation pattern is used by the first non-terrestrial network device to perform communication transmission in the first time period, the second location reservation pattern is used by the second non-terrestrial network device to perform communication transmission in a second time period, and the first time period overlaps the second time period.

In another possible implementation, the at least one area unit is at least one beam position, and the service status information of the at least one area unit includes a beam position identifier and a service urgency value of each of the at least one beam position.

In another possible implementation, the service status information of the second non-terrestrial network device includes one or more of the following: a quantity of terminal devices currently served by the second non-terrestrial network device, a service volume of the terminal device, a service delay requirement of the terminal device, a quantity of beams provided by the second non-terrestrial network device, and a load, visible time, or a weight parameter of the second non-terrestrial network device.

In another possible implementation, there is an association relationship between the first non-terrestrial network device and the at least one second non-terrestrial network device.

In another possible implementation, that there is an association relationship between the first non-terrestrial network device and the at least one second non-terrestrial network device includes: A value of a weight parameter of the first non-terrestrial network device is less than a value of a weight parameter corresponding to each of the at least one second non-terrestrial network device, and/or the at least one second non-terrestrial network device is a non-terrestrial network device adjacent to the first non-terrestrial network device.

In another possible implementation, the transceiver module 1102 is further configured to receive the second information from each of the at least one second non-terrestrial network device.

This application further provides a communication apparatus. FIG. 12 is a diagram of a fourth structure of a communication apparatus according to an embodiment of this application. The communication apparatus may be configured to perform the steps performed by the first non-terrestrial network device, the second non-terrestrial network device, or the first network device in the embodiments shown in FIG. 5, FIG. 6, and FIG. 8. For details, refer to related descriptions in the foregoing method embodiments.

The communication apparatus 1200 includes a processor 1201. Optionally, the communication apparatus 1200 further includes a memory 1202. Optionally, the communication apparatus 1200 further includes a transceiver 1203.

In a possible implementation, the processor 1201, the memory 1202, and the transceiver 1203 are separately connected through a bus, and the memory stores computer instructions.

For example, the communication apparatus may be configured to perform all or some of the steps performed by the first non-terrestrial network device in the embodiments shown in FIG. 5, FIG. 6, and FIG. 8. The processing module 901 in the foregoing embodiment may be specifically the processor 1201 in this embodiment. Therefore, a specific implementation of the processor 1201 is not described again. The transceiver module 902 in the foregoing embodiment may be specifically the transceiver 1203 in this embodiment. Therefore, a specific implementation of the transceiver 1203 is not described again.

For example, the communication apparatus may be configured to perform all or some of the steps performed by the second non-terrestrial network device in the embodiments shown in FIG. 6 and FIG. 8. The processing module 1001 in the foregoing embodiment may be specifically the processor 1201 in this embodiment. Therefore, a specific implementation of the processor 1201 is not described again. The transceiver module 1002 in the foregoing embodiment may be specifically the transceiver 1203 in this embodiment. Therefore, a specific implementation of the transceiver 1203 is not described again.

For example, the communication apparatus may be configured to perform all or some of the steps performed by the first network device in the embodiments shown in FIG. 6 and FIG. 8. The processing module 1101 in the foregoing embodiment may be specifically the processor 1201 in this embodiment. Therefore, a specific implementation of the processor 1201 is not described again. The transceiver module 1102 in the foregoing embodiment may be specifically the transceiver 1203 in this embodiment. Therefore, a specific implementation of the transceiver 1203 is not described again.

FIG. 13 is a diagram of a fifth structure of a communication apparatus according to an embodiment of this application. Refer to FIG. 13. The communication apparatus 1300 includes a logic circuit 1301 and an input/output interface 1302. The communication apparatus 1300 shown in FIG. 13 may be configured to perform the steps performed by the first non-terrestrial network device in the embodiments shown in FIG. 5, FIG. 6, and FIG. 8.

Optionally, the logic circuit 1302 may have a function of the processing module 901 in the embodiment shown in FIG. 9. The input/output interface 1302 may have a function of the transceiver module 902 in the embodiment shown in FIG. 9.

The communication apparatus 1300 shown in FIG. 13 may perform the technical solutions shown in the foregoing method embodiments. Implementation principles and beneficial effects of the communication apparatus are similar to those of the method embodiments. Details are not described herein again.

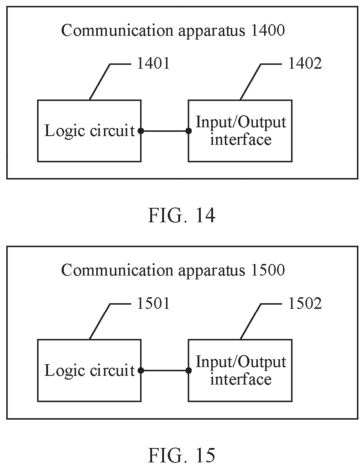

FIG. 14 is a diagram of a sixth structure of a communication apparatus according to an embodiment of this application. Refer to FIG. 14. The communication apparatus 1400 includes a logic circuit 1401 and an input/output interface 1402. The communication apparatus 1400 shown in FIG. 14 may be configured to perform the steps performed by the second non-terrestrial network device in the embodiments shown in FIG. 6 and FIG. 8.

Optionally, the logic circuit 1402 may have a function of the processing module 1001 in the embodiment shown in FIG. 10. The input/output interface 1402 may have a function of the transceiver module 1002 in the embodiment shown in FIG. 10.

The communication apparatus 1400 shown in FIG. 14 may perform the technical solutions shown in the foregoing method embodiments. Implementation principles and beneficial effects of the communication apparatus are similar to those of the method embodiments. Details are not described herein again.

FIG. 15 is a diagram of a seventh structure of a communication apparatus according to an embodiment of this application. Refer to FIG. 15. The communication apparatus 1500 includes a logic circuit 1501 and an input/output interface 1502. The communication apparatus 1500 shown in FIG. 15 may be configured to perform the steps performed by the first network device in the embodiments shown in FIG. 6 and FIG. 8.

Optionally, the logic circuit 1502 may have a function of the processing module 1101 in the embodiment shown in FIG. 11. The input/output interface 1502 may have a function of the transceiver module 1502 in the embodiment shown in FIG. 11.

The communication apparatus 1500 shown in FIG. 15 may perform the technical solutions shown in the foregoing method embodiments. Implementation principles and beneficial effects of the communication apparatus are similar to those of the method embodiments. Details are not described herein again.

This application further provides a communication system. The communication system includes a first non-terrestrial network device and a second non-terrestrial network device. The first non-terrestrial network device is configured to perform all or some of the steps performed by the first non-terrestrial network device in the embodiments shown in FIG. 5 and FIG. 6. The second non-terrestrial network device is configured to perform all or some of the steps performed by the second non-terrestrial network device in the embodiment shown in FIG. 6. Optionally, the communication system further includes a first network device, and the first network device is configured to perform all or some of the steps performed by the first network device in the embodiment shown in FIG. 6.

This application further provides another communication system. The communication system includes a first non-terrestrial network device and a first network device. The first non-terrestrial network device is configured to perform all or some of the steps performed by the first non-terrestrial network device in the embodiment shown in FIG. 8. The first network device is configured to perform all or some of the steps performed by the first network device in the embodiment shown in FIG. 8. Optionally, the communication system further includes a second non-terrestrial network device, and the second non-terrestrial network device is configured to perform all or some of the steps performed by the second non-terrestrial network device in the embodiment shown in FIG. 8.

An embodiment of this application further provides a computer program product including instructions. When the computer program product runs on a computer, the computer is enabled to perform the methods in the embodiments shown in FIG. 5, FIG. 6, and FIG. 8.

An embodiment of this application further provides a computer-readable storage medium, including computer instructions. When the computer instructions are run on a computer, the computer is enabled to perform the methods in the embodiments shown in FIG. 5, FIG. 6, and FIG. 8.

An embodiment of this application further provides a chip apparatus, including a processor, configured to: be connected to a memory, and invoke a program stored in the memory, to enable the processor to perform the methods in the embodiments shown in FIG. 5, FIG. 6, and FIG. 8.

It should be understood that the processor in embodiments of this application may be a central processing unit (central processing unit, CPU), or the processor may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It should be further understood that the memory in embodiments of this application may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) and is used as an external cache. By way of example but not limitative description, many forms of random access memories (random access memories, RAMs) can be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented by software, hardware (for example, a circuit), firmware, or any combination thereof. When the software is used to implement embodiments, all or some of the foregoing embodiments may be implemented in a form of a computer program product. The computer program product includes one or more computer instructions or computer programs. When the computer instructions or the computer programs are loaded or executed on a computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, and microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

It may be clearly understood by persons skilled in the art that, for the purpose of convenient and brief description, for detailed working processes of the foregoing described system, apparatus, and unit, refer to corresponding processes in the foregoing method embodiments. Details are not described herein again.

In the several embodiments provided in this application, it should be understood that the disclosed system, apparatus, and method may be implemented in other manners. For example, the foregoing described apparatus embodiments are merely examples. For example, division into the units is merely logic function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate parts may or may not be physically separate, and parts displayed as units may or may not be physical units, that is, may be located in one position, or may be distributed on a plurality of network units. Some or all of the units may be selected based on actual needs to achieve the objectives of the solutions of embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to a conventional technology, or all or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a ROM, a RAM, a magnetic disk, or an optical disc.

In conclusion, the foregoing embodiments are merely intended for describing the technical solutions of this application, but not for limiting this application. Although this application is described in detail with reference to the foregoing embodiments, persons of ordinary skill in the art should understand that they may still make modifications to the technical solutions recorded in the foregoing embodiments or make equivalent replacements to some technical features thereof. Such modifications or replacements do not make the essence of the corresponding technical solutions depart from the scope of the technical solutions of embodiments of this application.

## Claims

1. A location reservation pattern determining method, wherein the method comprises:
obtaining, by a first non-terrestrial network device, first information of each of at least one second non-terrestrial network device, wherein the first information of the second non-terrestrial network device comprises one or more of the following: a first location reservation pattern, service status information of at least one area unit in an area covered by the second non-terrestrial network device, and service status information of the second non-terrestrial network device, and the first location reservation pattern is used by the second non-terrestrial network device to perform communication transmission; and
determining, by the first non-terrestrial network device, a second location reservation pattern based on the first information of each second non-terrestrial network device, wherein the second location reservation pattern is used by the first non-terrestrial network device to perform communication transmission.

2. The method according to claim 1, wherein there is an association relationship between the first non-terrestrial network device and the at least one second non-terrestrial network device.

3. The method according to claim 2, wherein that there is an association relationship between the first non-terrestrial network device and the at least one second non-terrestrial network device comprises:
a value of a weight parameter of the first non-terrestrial network device is less than a value of a weight parameter corresponding to each of the at least one second non-terrestrial network device, and/or the at least one second non-terrestrial network device is a non-terrestrial network device adjacent to the first non-terrestrial network device.

4. The method according to claim 3, wherein the weight parameter of the first non-terrestrial network device is determined based on service status information of the first non-terrestrial network device, or is determined based on service status information of at least one area unit in an area covered by the first non-terrestrial network device.

5. The method according to any one of claims 1 to 4, wherein the first location reservation pattern comprises location information of an area unit for which the second non-terrestrial network device provides a service in a first time period.

6. The method according to claim 5, wherein the location information comprises an identifier of the area unit for which the second non-terrestrial network device provides the service in the first time period.

7. The method according to claim 5 or 6, wherein the first location reservation pattern further comprises a frequency band occupied by the second non-terrestrial network device in the first time period.

8. The method according to any one of claims 5 to 7, wherein the area unit for which the second non-terrestrial network device provides the service in the first time period comprises one or more beam positions, and the location information comprises an identifier of the one or more beam positions; or
the area unit for which the second non-terrestrial network device provides the service in the first time period corresponds to one or more beams, and the location information comprises an identifier of the one or more beams.

9. The method according to any one of claims 1 to 8, wherein the at least one area unit is at least one beam position, and the service status information of the at least one area unit comprises a beam position identifier and a service urgency value of each of the at least one beam position.

10. The method according to any one of claims 1 to 9, wherein the service status information of the second non-terrestrial network device comprises one or more of the following: a quantity of terminal devices served by the second non-terrestrial network device, a service volume of the terminal device, a service delay requirement of the terminal device, a quantity of beams provided by the second non-terrestrial network device, and a load, visible time, or the weight parameter of the second non-terrestrial network device.

11. The method according to any one of claims 1 to 10, wherein the obtaining, by a first non-terrestrial network device, first information of each of at least one second non-terrestrial network device comprises:
receiving, by the first non-terrestrial network device, the first information from each of the at least one second non-terrestrial network device; or
receiving, by the first non-terrestrial network device, the first information of each of the at least one second non-terrestrial network device from a first network device.

12. The method according to any one of claims 1 to 11, wherein the determining, by the first non-terrestrial network device, a second location reservation pattern based on the first information of each second non-terrestrial network device comprises:
when the first non-terrestrial network device joins a cluster in which the at least one second non-terrestrial network device is located, determining, by the first non-terrestrial network device, the second location reservation pattern based on the first information of each second non-terrestrial network device.

13. The method according to claim 12, wherein the method further comprises:
updating, by the first non-terrestrial network device, the weight parameter of the first non-terrestrial network device and/or the service status information of the at least one area unit.

14. The method according to any one of claims 1 to 11, wherein the method further comprises:
updating, by the first non-terrestrial network device, the weight parameter of the first non-terrestrial network device and/or the service status information of the at least one area unit, wherein a value of an updated weight parameter is less than a first threshold, and a service urgency value indicated in updated service status information of the at least one area unit is less than a second threshold;
sending, by the first non-terrestrial network device, the updated weight parameter and/or the updated service status information of the at least one area unit; and
exiting, by the first non-terrestrial network, a cluster in which the first non-terrestrial network device is currently located.

15. A location reservation pattern determining method, wherein the method comprises:
determining, by a second non-terrestrial network device, first information of the second non-terrestrial network device, wherein the first information comprises one or more of the following: a first location reservation pattern, service status information of at least one area unit in an area covered by the second non-terrestrial network device, and service status information of the second non-terrestrial network device, and the first location reservation pattern is used by the second non-terrestrial network device to perform communication transmission; and
sending, by the second non-terrestrial network device, the first information to a first non-terrestrial network device.

16. The method according to claim 15, wherein before the sending, by the second non-terrestrial network device, the first information to a first non-terrestrial network device, the method further comprises:
determining, by the second non-terrestrial network device, a weight parameter of at least one target non-terrestrial network device in a cluster in which the second non-terrestrial network device is located; and
determining, by the second non-terrestrial network device based on the weight parameter of the at least one target non-terrestrial network device, an object to which the first information is to be sent, wherein the object to which the first information is to be sent comprises the first non-terrestrial network device.

17. The method according to claim 16, wherein the at least one target non-terrestrial network device comprises all non-terrestrial network devices in the cluster in which the second non-terrestrial network device is located; or the at least one target non-terrestrial network device comprises a non-terrestrial network device adjacent to the second non-terrestrial network device.

18. The method according to claim 16 or 17, wherein the determining, by the second non-terrestrial network device, a weight parameter of at least one target non-terrestrial network device in a cluster in which the second non-terrestrial network device is located comprises:
receiving, by the second non-terrestrial network device, the weight parameter from the at least one target non-terrestrial network device.

19. The method according to claim 16 or 17, wherein the determining, by the second non-terrestrial network device, a weight parameter of at least one target non-terrestrial network device in a cluster in which the second non-terrestrial network device is located comprises:
receiving, by the second non-terrestrial network device, service status information from at least one area unit in an area covered by each of the at least one target non-terrestrial network device; and
determining, by the second non-terrestrial network device, the weight parameter of the target non-terrestrial network device based on the service status information of the at least one area unit in the area covered by each target non-terrestrial network device.

20. The method according to claim 15, wherein before the sending, by the second non-terrestrial network device, the first information to a first non-terrestrial network device, the method further comprises:
receiving, by the second non-terrestrial network device, first indication information from a first network device, wherein the first indication information indicates an object to which the first information is to be sent, and the object to which the first information is to be sent comprises the first non-terrestrial network device.

21. The method according to any one of claims 16 to 20, wherein the object to which the first information is to be sent comprises a non-terrestrial network device that is in the cluster in which the second non-terrestrial network device is located and that comprises a weight parameter whose value is less than a value of a weight parameter of the second non-terrestrial network device.

22. A location reservation pattern sending method, wherein the method comprises:
determining, by a first network device, a first location reservation pattern, wherein the first location reservation pattern is used by a first non-terrestrial network device to perform communication transmission; and
sending, by the first network device, first information to the first non-terrestrial network device, wherein the first information indicates the first location reservation pattern.

23. A location reservation pattern receiving method, wherein the method comprises:
receiving, by a first non-terrestrial network device, first information from a first network device, wherein the first information indicates a first location reservation pattern; and
performing, by the first non-terrestrial network device, communication transmission based on the first location reservation pattern.

24. The method according to claim 22 or 23, wherein the first location reservation pattern comprises location information of an area unit for which the first non-terrestrial network device provides a service in a first time period.

25. The method according to claim 24, wherein the location information comprises an identifier of the area unit for which the first non-terrestrial network device provides the service in the first time period.

26. The method according to claim 24 or 25, wherein the first location reservation pattern further comprises a frequency band occupied by the first non-terrestrial network device in the first time period.

27. The method according to any one of claims 24 to 26, wherein the area unit for which the first non-terrestrial network device provides the service in the first time period comprises one or more beam positions, and the location information comprises an identifier of the one or more beam positions; or
the area unit for which the first non-terrestrial network device provides the service in the first time period corresponds to one or more beams, and the location information comprises an identifier of the one or more beams.

28. The method according to any one of claims 22 and 24 to 27, wherein the determining, by a first network device, a first location reservation pattern comprises:
determining, by the first network device, the first location reservation pattern based on second information of each of at least one second non-terrestrial network device, wherein
the second information of the second non-terrestrial network device comprises one or more of the following: a second location reservation pattern, service status information of at least one area unit in an area covered by the second non-terrestrial network device, and service status information of the second non-terrestrial network device, and the second location reservation pattern is used by the second non-terrestrial network device to perform communication transmission.

29. The method according to claim 28, wherein the at least one area unit is at least one beam position, and the service status information of the at least one area unit comprises a beam position identifier and a service urgency value of each of the at least one beam position.

30. The method according to claim 28 or 29, wherein the service status information of the second non-terrestrial network device comprises one or more of the following: a quantity of terminal devices currently served by the second non-terrestrial network device, a service volume of the terminal device, a service delay requirement of the terminal device, a quantity of beams provided by the second non-terrestrial network device, and a load or visible time of the second non-terrestrial network device.

31. The method according to any one of claims 28 to 30, wherein there is an association relationship between the first non-terrestrial network device and the at least one second non-terrestrial network device.

32. The method according to claim 31, wherein that there is an association relationship between the first non-terrestrial network device and the at least one second non-terrestrial network device comprises:
a value of a weight parameter of the first non-terrestrial network device is less than a value of a weight parameter corresponding to each of the at least one second non-terrestrial network device, and/or the at least one second non-terrestrial network device is a non-terrestrial network device adjacent to the first non-terrestrial network device.

33. The method according to any one of claims 28 to 32, wherein the method further comprises:
receiving, by the first network device, the second information from each of the at least one second non-terrestrial network device.

34. A communication apparatus, wherein the communication apparatus comprises a processing module and a transceiver module, wherein
the processing module is configured to perform the processing operation according to any one of claims 1 to 14, and the transceiver module is configured to perform the receiving and sending operations according to any one of claims 1 to 14;
the processing module is configured to perform the processing operation according to any one of claims 15 to 21, and the transceiver module is configured to perform the receiving and sending operations according to any one of claims 15 to 21;
the processing module is configured to perform the processing operation according to any one of claims 22 and 24 to 33, and the transceiver module is configured to perform the receiving and sending operations according to any one of claims 22 and 24 to 33; or
the processing module is configured to perform the processing operation according to any one of claims 23 to 27 and 29 to 32, and the transceiver module is configured to perform the receiving and sending operations according to any one of claims 23 to 27 and 29 to 32.

35. A communication apparatus, wherein the communication apparatus comprises a processor; and the processor is configured to execute a computer program or computer instructions in a memory to perform the method according to any one of claims 1 to 14, the method according to any one of claims 15 to 21, the method according to any one of claims 22 and 24 to 33, or the method according to any one of claims 23 to 27 and 29 to 32.

36. The communication apparatus according to claim 35, wherein the communication apparatus further comprises the memory.

37. A computer-readable storage medium, wherein the computer-readable storage medium stores a computer program; and when the computer program is executed by an apparatus, the apparatus is enabled to perform the method according to any one of claims 1 to 14, the method according to any one of claims 15 to 21, the method according to any one of claims 22 and 24 to 33, or the method according to any one of claims 23 to 27 and 29 to 32.

38. A computer program product, wherein when the computer program product runs on a computer, the computer is enabled to perform the method according to any one of claims 1 to 14, the method according to any one of claims 15 to 21, the method according to any one of claims 22 and 24 to 33, or the method according to any one of claims 23 to 27 and 29 to 32.
